# EUROPEAN PATENT SPECIFICATION

(11) **EP 1 178 258 B1**
(45) Date of publication and mention of the grant of the patent: **29.03.2006**
(21) Application number: 01830346.1
(22) Date of filing: 30.05.2001
(51) Int. Cl.: F16P 3/02, B23Q 11/08

(54) **Protective cover able to be associated to a work organ movable at least in one plane**
Schutzabdeckung zum Anbau an ein in mindestens einer Ebene beweglichen Arbeitorgans
Panneau de protection pouvant être associé à un organe de travail mobile dans au moins un plan

(30) Priority: 01.08.2000 IT BO000477; 29.09.2000 IT BO000567
(43) Date of publication of application: 06.02.2002
(73) Proprietor: P.E.I. Protezioni Elaborazioni Industriali S.r.l., 40012 Calderara di Reno (Bologna) (IT)
(72) Inventor: Tabellini, Giorgio, 40037 Sasso Marconi (Bologna) (IT)
(74) Representative: Lanzoni, Luciano

(56) References cited:
- EP-A- 0 832 715
- EP-A- 1 048 399
- DE-A- 10 018 584
- DE-A- 19 946 554
- US-A- 5 560 415

## Description

The present invention relates to a protective cover able to be associated to a work organ movable at least in one plane.

The cover of the present invention can advantageously be used to cover and protect an open zone of a machine tool, automated or the like, in which, on the area defined by the aforesaid open zone, are destined to move some moving parts of the machine itself.

In particular, the cover of the present invention can be associated to a work organ or tool, which is movable bidirectionally along a respective operative path developing in a plane that is substantially parallel to the plane of lay of the aforementioned area, according to at least one reference coordinate.

Specifically, the cover of the present invention can be associated both to a work organ movable according to a single reference coordinate of the aforementioned plane, and to a work organ movable according to two reference coordinates of the plane itself.

Covers of this kind are mainly used to prevent extraneous bodies such as dirt, chips, dusts, work process resides, or work process emulsions, from penetrating into the aforementioned open zone and thereby compromise the proper operation of the machine. Generally, such types of covers comprise a plurality of covering elements, which are essentially constituted by relatively thin planar panels, mutually enclosed in a pack, and positioned in contact one over the other. Of said covering elements, one is able to be rigidly fastened to the machine along the respective edges defining the aforesaid open zone, and serves as a support for the others which, instead, are movable and, specifically, able to slide relative to each other and all relative to the fixed cover element to follow the movements that the work organ effects along its operative path. Specifically, of the movable cover elements, one is able to be fastened rigidly to the work organ to be driven thereby along the aforesaid operative path.

In particular, among the covers provided to be associated to a work order movable according to a single reference coordinate of the aforesaid plane, from the not pre-published Italian patent application no. BO99U000053 (corresponding to DE 10 018 584 A) in the name of the same Applicant, a covering and protecting device able to be associated to a work organ of a machine tool is known. The work organ is movable linearly and bidirectionally along a rectilinear path, and the covering and protecting device is able to follow the movements of the work organ maintaining covered and protected a corresponding zone of the machine, wherefrom the aforementioned organ projects in overhang.

The sliding of the movable panels is guided by two guiding bars supported by two respective edges of the panel defining the aforementioned first cover element. Specifically, the guiding bars which present a "C" shaped cross section and extend longitudinally in the direction of motion of the work organ.

Each cover panel presents a respective rectangular opening able to be traversed by the work organ, and specifically the opening of the first cover element, or first panel, defines an area to be covered by the remaining movable panels, whilst their openings have mutually decreasing size starting from the one facing the first panel. The outermost cover panel from the machine. i.e. the movable panel positioned on the opposite side of the first panel relative to the set of the movable panels, is able to be engaged and driven directly by the work organ along the aforesaid rectilinear path, whilst each movable panel is engaged and driven by an abutting tab of the respective adjacent outermost movable panel.

In this way, during the movement of the work organ along the aforesaid path, the movable panels, in the various work positions, cover corresponding rectangular portions of the area defined by the opening of the first panel.

The device described above overall has a decidedly reduced thickness, however the aforementioned "C" shaped guiding bars tend to get easily dirty due to the deposit of chips, dusts, or other work process residues.

This drawback, which in the long run can lead to a wearing of the bars and of the movable panels and/or to a difficult sliding of the movable panels, is all the more acute the finer the work process residues are.

It is also clear that, because of the aforesaid drawback, the cover described above is practically unusable for work organs movable along horizontal paths.

Among the covers provided to be associated to a work organ movable according to two reference coordinates of the aforesaid plane, protective covers are known in which the fixed element has such peripheral dimensions as to cover the aforesaid open zone completely and is provided with an opening that confers a frame conformation to the panel. The opening defines the maximum possible excursion of the work organ along the two aforesaid reference coordinates and its dimensions are substantially equal to the area whereon the work organ itself is destined to move.

Starting from the fixed covering element, the remaining movable elements are progressively smaller until reaching the last one of the series, whereto the work organ is associated. Each movable element has a similar conformation to the conformation of the others, and is provided, in turn, with a respective opening which confers to each of them a corresponding frame conformation, similar to that of the fixed element. The outer and inner peripheral dimensions of a generic frame-shaped element exhibit dimensional ratios that are similar to the outer and inner peripheral dimensions both of the larger element and of the smaller element adjacent thereto.

Each covering element is kinematically connected to the others and it is dimensionally complementary to the other elements which are adjacent thereto in such a way that, as a result of a displacement of the work organ along the aforementioned path, the element associated thereto pulls behind it, in succession, also the others which, sliding relative to each other, maintain closed and protected the area of the aforesaid zone during the operative movements of the organ itself. In this way the protective cover enables to protect parts for supporting and actuating the work organ which extend towards the interior of the machine.

According to some known versions of the protective covers of the type described above, the driving movements between the respective covering elements are transmitted by means of respective cinematic transmission mechanisms, such as chains and corresponding gear wheels, or parallelogram levers, which are extremely complex and difficult to operate, especially in the case in which the work organ moves with relatively high operative speeds. Moreover, these types of cinematic mechanisms, in addition to requiring fairly sizeable mounting costs and times, impose decidedly excessive weight and bulk on the protective covers.

In particular, the movable elements of the bulkier and heavier protective covers are subject to dangerous jams and blockages, which are mostly due to deformations or breakage of the cinematic mechanisms caused by the excessive weight of the movable elements themselves.

The drawbacks described above have partly been eliminated in a protective cover of the type described in the not pre-published Italian patent application no. BO98AOOO557 (corresponding to DE 19 946 554 A) in the name of the same Applicant.

This protective cover comprises a plurality of covering elements of parallelepiped box shape, each of which has a rectangular wall of greater extension provided with a central opening. This wall defines a planar covering panel of the type described above, which is bordered by four rectangular walls extending squarely from the panel itself and, because of the opening, exhibits a frame conformation which allows the traversing of the panel by the work organ.

The covering elements are totally open on the side opposite to the aforesaid panels and have decreasing dimensions, between a largest element and a smallest element of the aforementioned plurality of elements.

The covering elements are positioned one inside the other, with the related panels positioned by twos adjacent and free mutually to slide according to the two aforementioned reference coordinates, and specifically the largest element is fastened to the machine, whilst the smallest element is integrally connected to the work organ.

In each covering element, two of the four rectangular walls that extend squarely from the related panel have longitudinal slots which are coupled in sliding fashion to two parallel supporting and guiding rods common to all covering elements. Said supporting and guiding rods allow the mutual movement of the elements according to a parallel direction and an orthogonal direction to the rods themselves, and allow to eliminate at least in part the drawbacks given by chains and respective gear wheels and by parallelogram levers.

However, in a protective cover of the type described in the aforementioned Italian patent application no. BO98A000557, the central openings of the related panels, which exhibit progressively smaller sizes from the largest to the smallest element define, for the work organ, a funnel passage with decreasing section from the work zone to the zone of the machine to be protected. This passage is delimited by four lateral walls mutually positioned according to a pyramid frustum, each whereof exhibits a stepped profile defined by the superposition of the aforementioned panels.

The stepped profile of the funnel passage makes the latter prone to get easily dirty due to the depositing of chips, dusts, or other work process residues which may harmfully insinuate themselves between each pair of superposed panels. This drawback, which in the long run can lead to the wear and/or to the difficult sliding of the movable panels, is clearly all the more acute the finer the work process residues are.

In general, therefore, both in the case in which the work organ is movable according to a single reference coordinate of the aforesaid plane, and in the case in which the work organ is movable according to two reference coordinates of the plane, the respective protective covers of the prior art exhibit such a structure as to favour the depositing and/or insinuating of work process residues inside the structure itself.

The aim of the present invention is to provide a protective cover that is wholly or partly free from the drawbacks described above, and that in particular has such a structure as to be, itself, protected from chips, dusts, or other work process residues produced by the action of the work organ whereto the cover can be associated.

According to the present invention, it is provided a protective cover according to one or more of the annex claims.

The invention shall now be described, purely by way of non limiting example, with reference to the accompanying drawings, in which:
- Figure 1 is an exploded view of a first embodiment of the protective cover according to the present invention;
- Figures 2 and 2a are perspective view, transversely sectioned for the sake of clarity, and, respectively, a whole view of the cover of Figure 1;
- Figure 3 is a lateral view of the cover shown in Figure 2;
- Figure 4 is a rear elevation view of the device shown in Figure 2;
- Figure 5 is a front elevation view of the device shown in Figure 2;
- Figure 6 is a perspective view, transversely sectioned for the sake of clarity, of a second embodiment of the device according to the present invention;
- Figure 7 is a lateral view of the device shown in Figure 6;
- Figure 8 is a rear elevation view of a third embodiment of the device according to the present invention;
- Figure 9 is a lateral view of the device shown in Figure 8;
- Figure 10 is a lateral view of a fourth embodiment of the device according to the present invention;
- Figures 11 and 12 show a front view of a fifth embodiment of the protective cover according to the present invention in two respective operative positions;
- Figures 13 and 14 show respective perspective views of the protective cover of Figures 11 and 12;
- Figure 15 shows an additional perspective and transversely sectioned view of the protective cover of Figures 11 through 14;
- Figure 16 shows an exploded view of the protective cover of Figures 11 and 12;
- Figure 17 shows a perspective view in enlarged scale with some parts removed of a detail of the protective cover of Figures 11 and 12;
- Figure 18 shows a perspective view of a variation of the protective cover shown in Figures 11 through 17;
- Figure 19 shows an additional perspective view, with some parts removed for the sake of clarity, the protective cover of Figure 18;
- Figure 20 shows, in an additional perspective and transversely sectioned view, the protective cover of Figure 18;
- Figure 21 is an additional perspective view, with some parts removed for the sake of clarity, of the protective cover of Figures 18 and 19 in a different operative position from the one shown in Figure 19;
- Figure 22 shows a perspective view of an additional embodiment of the protective cover according to the present invention;
- Figure 23 shows a different perspective view of the cover of Figure 22; and
- Figure 24 shows a perspective view, in enlarged scale, of a detail of the cover shown in Figure 23.

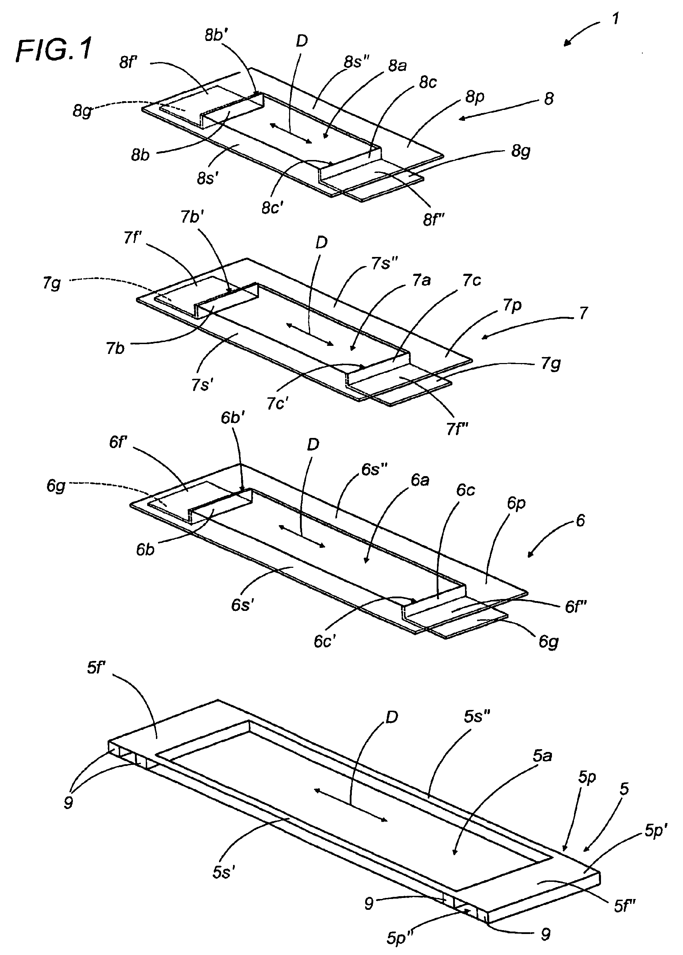

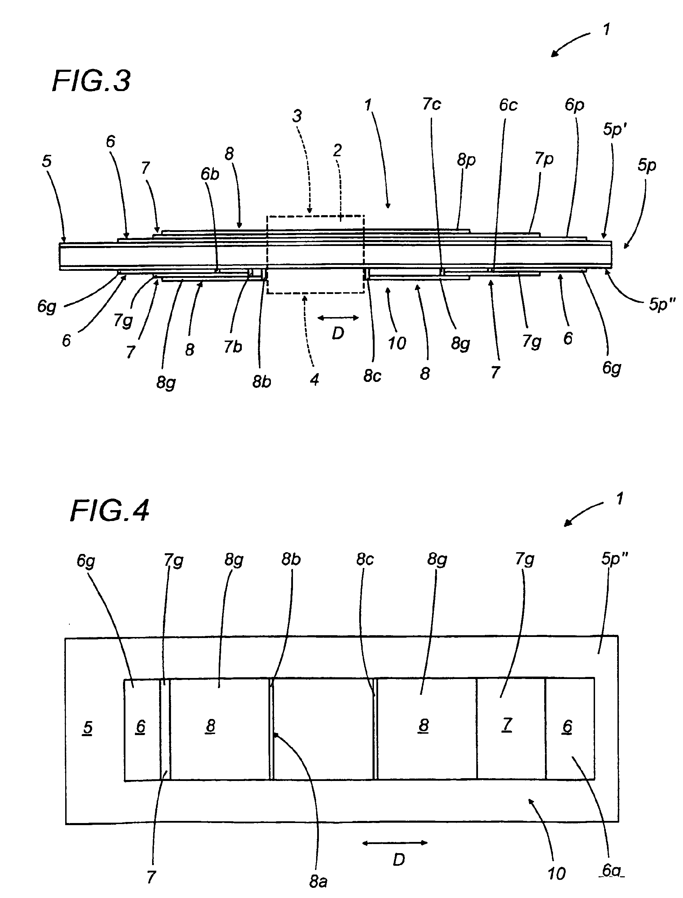

With reference to Figures 1 through 5, the number 1 indicates a protective cover for machines or plants comprising a work organ 2 (shown schematically in Figure 3 with a dashed line block) movable at least according to a determined linear direction D.

The cover 1 can be associated to the work organ 2 to follow the to and fro movements thereof along the direction D maintaining covered and protected a corresponding area (not shown) of the machine or of the plant.

The organ 2 is, in particular, an operative organ of a machine tool (not shown), and presents a rear 4, whereby the organ 2 itself projects in overhang from the machine tool, and a work front 3 positioned opposite to the rear 4 relative to the cover 1.

The cover 1 comprises a series of covering elements, mutually fastened and coupled in sliding fashion, which are in the form of a first cover element 5, able to be fastened (in a manner that is not shown herein) to the frame of the machine tool in correspondence with the aforesaid zone (not shown) to be protected, and of a plurality of cover elements 6, 7, 8 movable relative to each other and relative to the element 5 according to the aforementioned direction D of motion of the work organ 2. In particular, the element 6 is the closest to the element 5, whilst the element 8 is the farthest from the element 5 and is able to be engaged and driven by the work organ 2 in the motion thereof along the direction D.

As Figure 1 more clearly shows, each cover element 5, 6, 7, 8 has a respective rectangular opening 5a, 6a, 7a, 8a for the passage of the work organ 2.

The opening 5a of the element 5 defines an area to be covered by the movable cover elements 6, 7, 8 in their various work positions consequent to the movement of the work organ 2 along the direction D.

The openings 5a, 6a, 7a, 8a all have the same size along a direction orthogonal to the direction D, whilst the openings 6a, 7a, 8a of the movable elements 6, 7, 8 have, according to the direction D, smaller size than the opening 5a. In particular, the openings 6a, 7a, 8a have, according to the direction D, mutually decreasing size, from the movable cover element 6 closest to the element 5 to the movable cover element 8 farthest form the element 5

The cover elements 5, 6, 7, 8 comprise respective cover panels 5p, 6p, 7p, 8p, and are preferably made of metallic material, for instance steel.

In particular, the panel 5p of the element 5 is formed by two rectangular planar plates 5p' and 5p", which are mutually parallel and superposed and are distanced from each other by a plurality of spacer elements 9 whereto the plates 5p' and 5p" themselves are fastened; whilst the panels 6p, 7p, 8p are defined by respective relatively thin rectangular planar plates. Alternatively, according to a variation not shown herein, the panel 5p is constituted by a single plate, preferably of greater thickness than the plates defining the panels 6p, 7p, 8p.

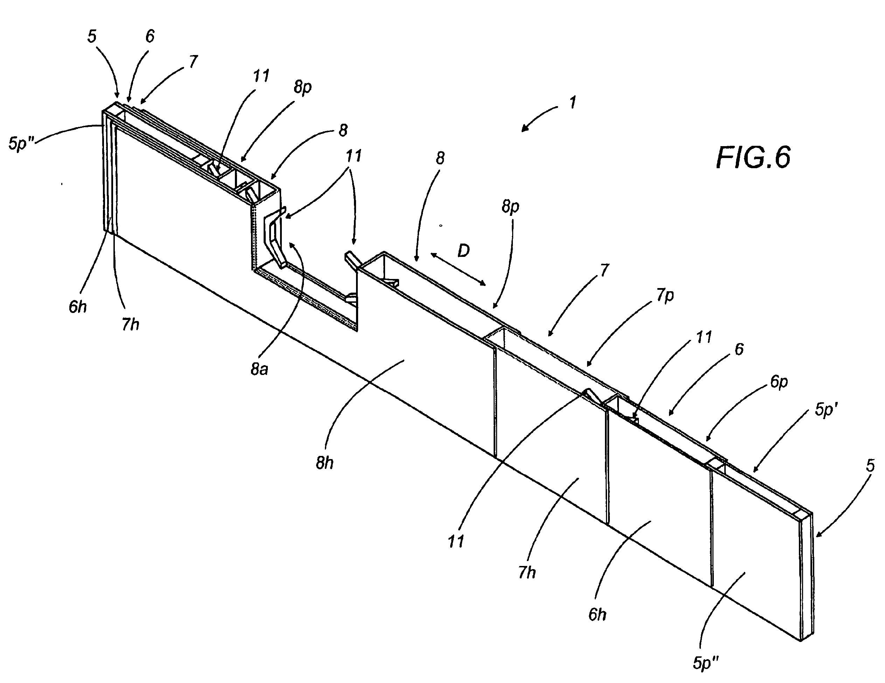

As Figures 3 and 5 more clearly show, the panel 8p is superposed to the panel 7p, which is superposed to the panel 6p, which, lastly, is superposed to the panel 5p.

The panel 5p has, according to the direction D, greater size than the panels 6p, 7p, 8p, and the latter have, also according to the direction D, mutually decreasing size, from the movable cover element 6 closest to the element 5 to the movable cover element 8 farthest from the element 5.

As shown in Figure 1, the panels 5p, 6p, 7p, 8p have a first and a second flap 5f, 5f", 6f, 6f', 7f, 7f', 8f, 8f", which develop transversely to the direction D, are longitudinally opposite and are mutually connected by longitudinal strips 5s', 5s", 6s', 6s", 7s', 7s", 8s', 8s" bordering and defining the respective aforesaid rectangular passage openings 5a, 6a, 7a, 8a.

Each of the movable elements 6, 7, 8 comprises a first and a second tab 6b, 6c, 7b, 7c, 8b, 8c, which are positioned coinciding with opposite longitudinal edges 6b', 6c', 7b', 7c', 8b', 8c' of the related openings 6a, 7a, 8a and extend squarely from the respective panels 6p, 7p, 8p on the side of the element 5.

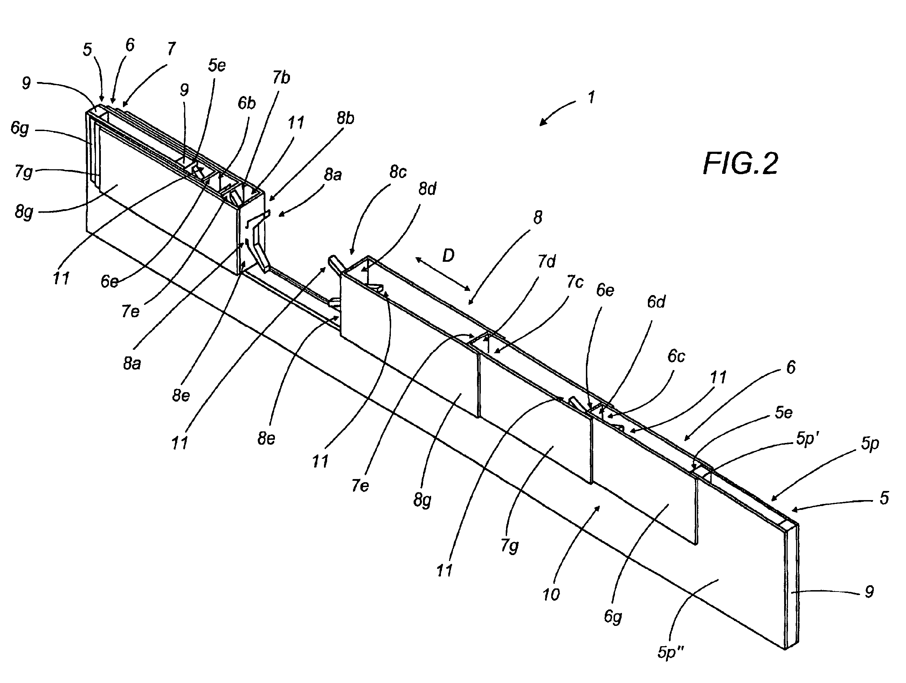

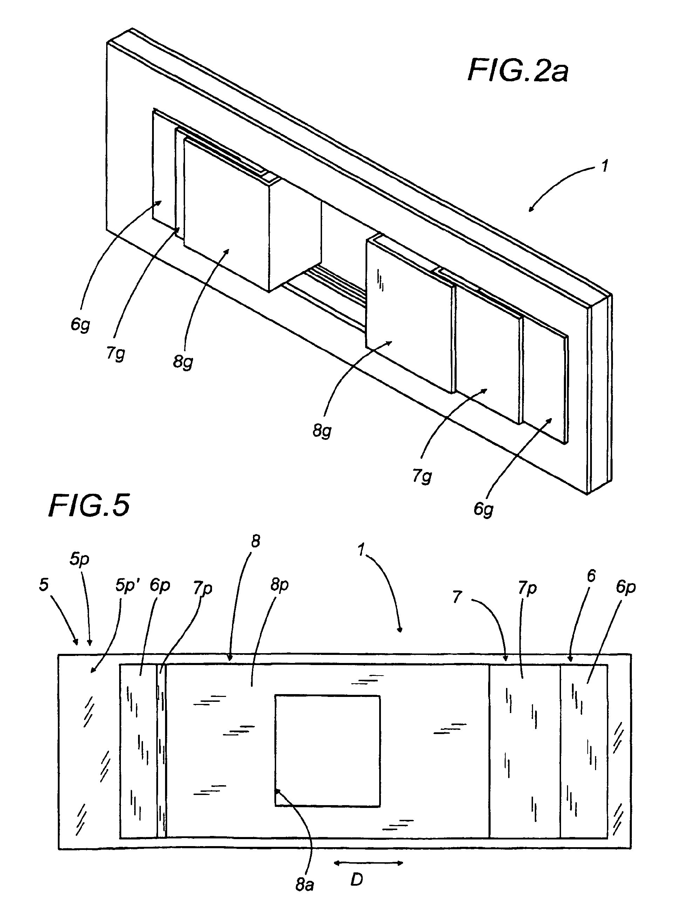

As Figure 2 more clearly shows, the tabs 6b, 6c, 7b, 7c, 8b, 8c of each movable element 6, 7, 8 define, each, a face 6d, 7d, 8d for the engagement with a corresponding abutment face 5e, 6e, 7e of an adjacent covering element 5, 6, 7 to provide for driving and arresting the elements 6, 7, 8 themselves along the direction D. In particular, the engagement face 6d, 7d, 8d of each tab 6b, 6c, 7b, 7c, 8b, 8c is oriented towards the exterior of the corresponding opening 6a, 7a, 8a.

The arrest of the elements 6, 7, 8 is assured by the two longitudinally opposite abutment faces 5e of the panel 5p, whilst the faces 8e of the tabs 8b, 8c which are oriented towards the interior of the opening 8a define surfaces for the direct engagement and driving of the element 8 by the work organ 2, which extends through the opening 8a and is fastened in sealed fashion (in a known manner, not shown herein) to the flaps 8f and 8f' and to the strips 8s' and 8s".

From each tab 6b, 6c, 7b, 7c, 8b, 8c squarely extends a planar appendage 6g, 7g, 8g oriented towards the exterior of the respective opening 6a, 7a, 8a.

As Figure 3 more clearly shows, the appendages 6g, 7g, 8g relating to each panel 6p, 7p, 8p are delimited externally by respective longitudinal edges which are mutually separated by a length equal to the distance between the two longitudinal end edges of the respective panels 6p, 7p, 8p themselves.

The dimensions of the tabs 6b and 6c of the panel 6p, measured in the direction orthogonal to the panel 6p itself, are such that the respective appendages 6g are in contact with the plat 5p" of the element 5. Moreover, the size of the tabs 6b, 6c, 7b, 7c, 8b, 8c relative to each panel 6p, 7p, 8p, measured in the orthogonal direction to the panels 6p, 7p, 8p themselves, is increasing from the panel 6 to the panel 8 according to an increment equal to the thickness of the appendages 6g, 7g, 8g. In this way, the appendages 7g and 8g are in contact, respectively, with the appendages 7g and 8g, and the appendages 6g, 7g and 8g constitute latching portions of the elements 6, 7, 8 which define, together with the element 5, guiding and holding means 10 to couple, the elements 5, 6, 7 and 8 in mutually sliding fashion.

As shown in Figure 2, between each pair of cover elements 5, 6, 7, 8 are interposed cushioning elements 11 of a known type, described in European publication No. EP 0 832 715 and in not pre-published European patent application No. EP 00830303.4 (corresponding to EP 1 048 399), both in the name of the same Applicant.

From the above description it is evident that the cover 1 is completely closed from the side of the work front 3 of the organ 2. Advantageously, moreover, the cover 1 does not have, from the side of the work front 3 of the organ 2, any groove, recess or the like able to collect even very fine work process residues. The cover 1 is therefore suitable both for work organs 2 movable in the horizontal direction and for work organs 2 movable in the vertical direction.

The same result is obtained by the variations of the cover 1 described hereafter with reference to Figures 6 through 10.

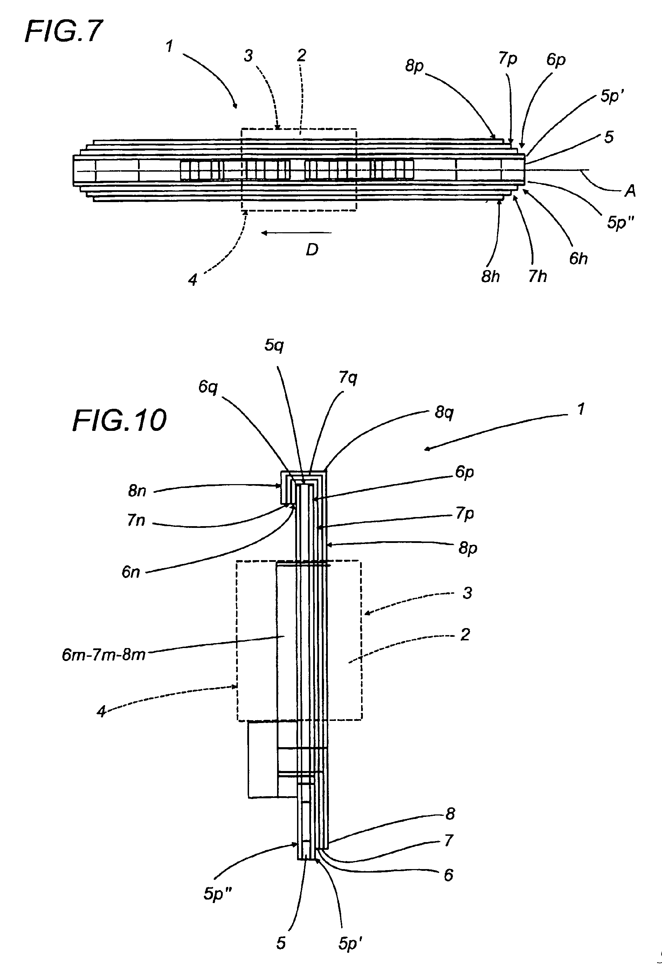

In the variation shown in Figures 6 and 7, the only difference is constituted by the fact that the appendages 6g, 7g and 8g are replaced by respective panels 6h, 7h, 8h wholly identical to the panels 6p, 7p, 8p. In this way, the elements 6, 7, 8 and the entire cover 1 present a plane of symmetry that coincides with a median plane of symmetry of the element 5.

The cover 1 according to this variation can indifferently have the panels 6p, 7p, 8p oriented towards the work front 3 of the organ 2 and the panels 6h, 7h and 8h oriented towards the rear 4 (Figure 7), or, vice versa, the panels 6p, 7p and 8p oriented towards the rear 4 and the panels 6h, 7h, and 8h oriented towards the work front 3 of the organ 2.

In both cases, the symmetrical structure of the cover 1 causes the guiding and holding means 10 to define means for the telescopic coupling between the cover elements 5, 6, 7 and 8.

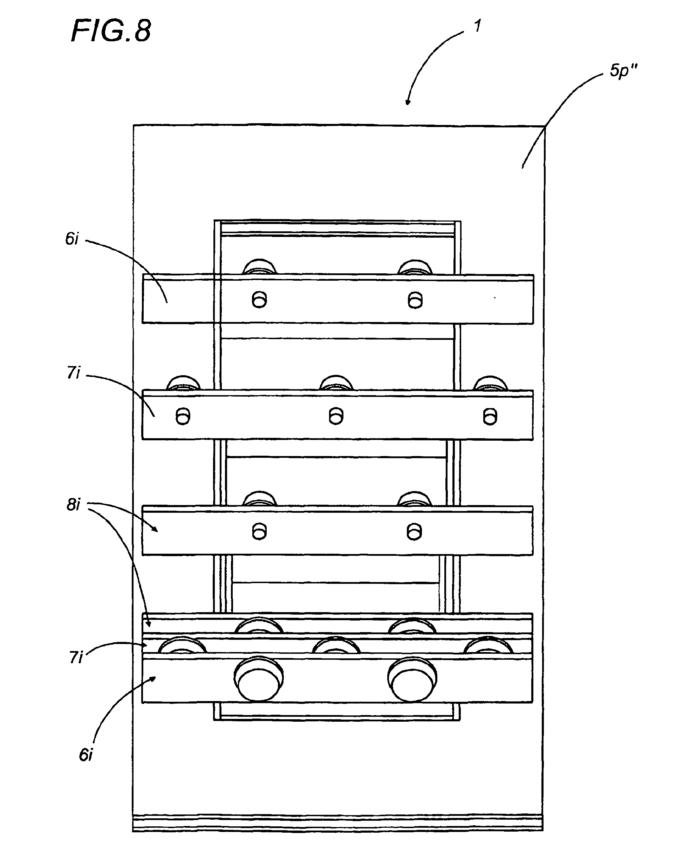

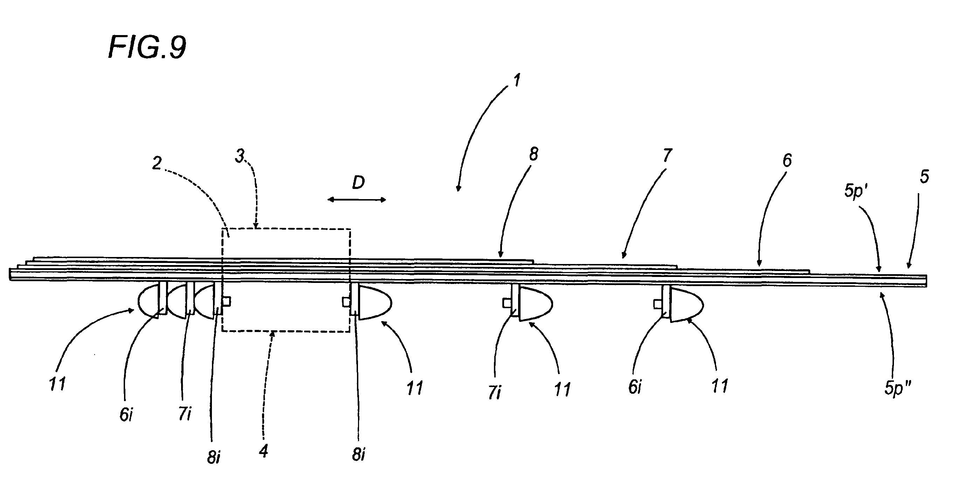

In the variation shown in Figures 8 and 9, the appendages 6g, 7g and 8g are replaced by respective planar appendages 6i, 7i and 8i, coplanar to the respective tabs 6b, 6c, 7b, 7c, 8b, 8c.

Each appendage 6i, 7i, 8i forms with the respective tab 6b, 6c, 7b, 7c, 8b, 8c a substantially "T" shaped planar wall and the size of the tabs 6b, 6c, 7b, 7c, 8b, 8c measured in the direction orthogonal to the panels 6p, 7p, 8p is the same for all the tabs 6b, 6c, 7b, 7c, 8b, 8c.

In this way, as Figure 8 more clearly shows, each appendage 6i, 7i, 8i latches onto the element 5 engaging in sliding fashion the plate 5p" in correspondence with both the strips 5s' and 5s" of the element 5 itself.

In Figures 8 and 9, moreover, the cushioning elements 11 are replaced by different rubber cushioning elements which for the sake of discussion convenience are equally indicated with the number 11.

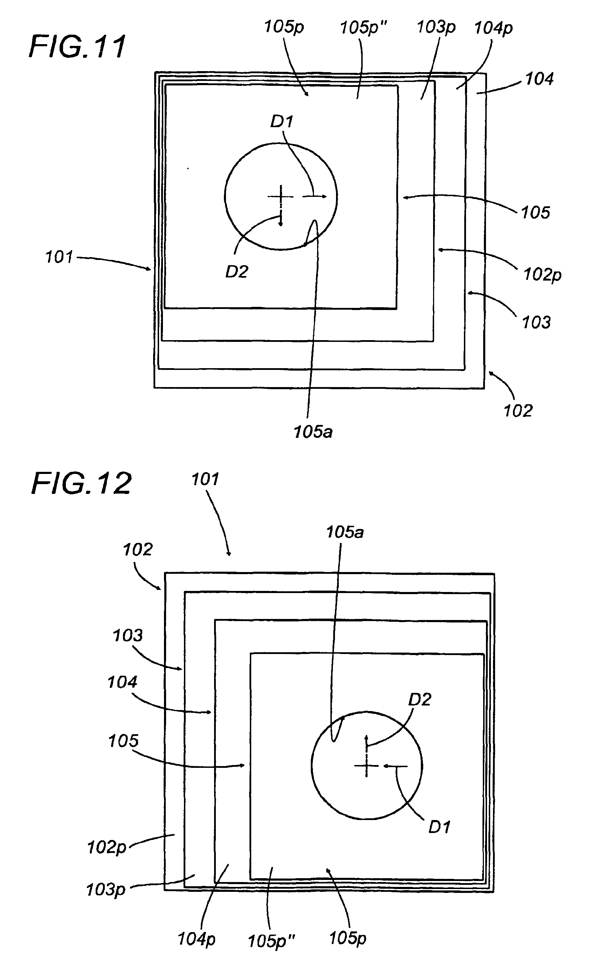

In the variation shown in Figure 10, the appendages 6g, 7g and 8g are replaced by respective planar appendages 6m, 7m and 8m coplanar to the respective tabs 6b, 6c, 7b, 7c, 8b, 8c.

Each appendage 6m, 7m, 8m forms with the respective tab 6b, 6c, 7b, 7c, 8b, 8c a substantially "L" shaped planar wall and the size of the tabs 6b, 6c, 7b, 7c, 8b, 8c measured in the orthogonal direction to the panels 6p, 7p, 8p is the same for all tabs 6b, 6c, 7b, 7c, 8b, 8c.

In this way, each appendage 6m, 7m, 8m latches onto the element 5 engaging in sliding fashion the plate 5p" in correspondence with only one of the two strips 5s' and 5s" of the element 5 itself.

Moreover, the element 6 has an additional appendage 6n, which extends from one of the two strips 6s', 6s" of the panel 6p and has a "C" shaped cross section to envelope and latch the panel 5 around the plates 5p' and 5p". Specifically, the appendage 6n has a planar portion 6q transverse to the panel 6p, which bears in sliding fashion on an edge 5q of the panel 5 lying between the plates 5p' and 5p".

Similarly, the element 7 has an additional appendage 7n, which extends from one of the two strips 7s', 7s" of the panel 7p and has a "C" shaped cross section to envelope and latch the appendage 6n. Specifically, the appendage 7n has a planar portion 7q transverse to the panel 7p, which bears in sliding fashion on the portion 6q of the appendage 6n.

Similarly, lastly, the element 8 has an additional appendage 8n, which extends from one of the two strips 8s', 8s" of the panel 8p and has a "C" shaped cross section to envelope and latch the appendage 7n. Specifically, the appendage 8n has a planar portion 8q transverse to the panel 8p, which bears in sliding fashion on the portion 7q of the appendage 7n.

Although Figure 10 does not show the cushioning elements 11, it is clear that they can equally be present, for instance in the form shown in Figures 8 and 9.

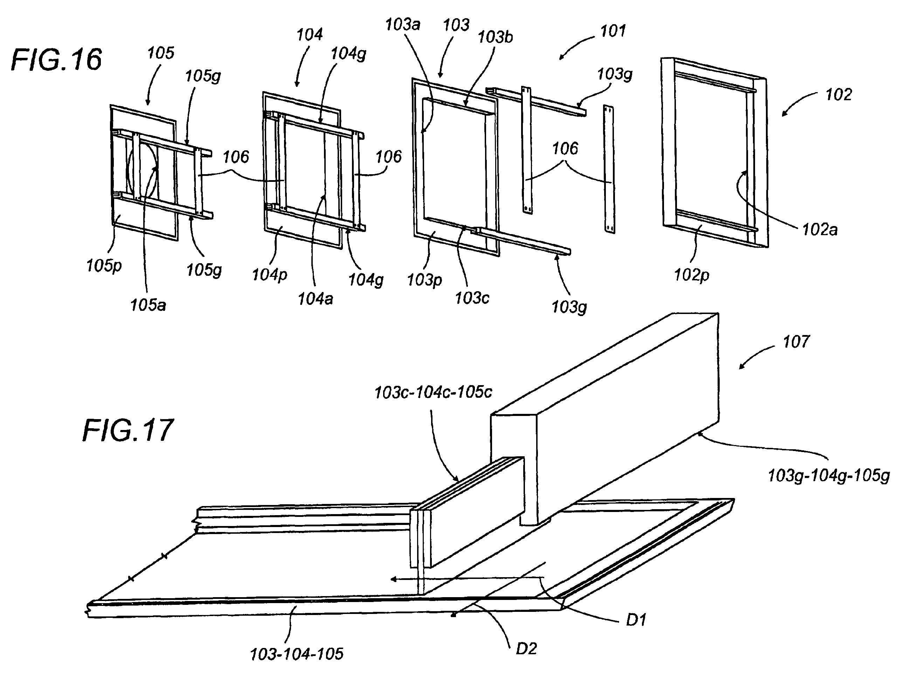

With reference to Figures 11 through 16, the number 101 indicates a protective cover for machine tools, automated or the like, comprising a work organ (not shown) movable at least in the plane of Figures 11 and 12.

Cover 101 can be associated to the work organ to follow the combined to and from movements thereof along two directions D1 and D2, mutually orthogonal and lying on the plane of Figures 11 and 12, maintaining covered and protected a corresponding zone (not shown) of the machine whereof the work organ itself is a part.

The work organ is, in particular, an operative organ of a machine tool (not shown), and has a rear (not shown), whereby the organ itself projects in overhang from the machine tool, and a work front (not shown), positioned at the opposite side from the rear relative to the cover 101. Specifically, observing Figures 11 and 12, the rear of the work organ and the zone to be protected of the machine tools are positioned posteriorly to the cover 101, whilst the front of the work organ and the related work zone are positioned towards the observer, anteriorly to the cover 101.

The cover 101 comprises a series of cover elements, mutually fastened and coupled in sliding fashion, which are in the form of a first cover element 102, able to be fastened (in a manner not shown herein) to the frame of the machine tool in correspondence with the aforementioned zone to be protected, and of a plurality of cover elements 103, 104, 105 movable relative to each other and relative to the element 102 according to the aforementioned directions D and D2 of motion of the work organ. In particular, the element 103 is the closest to the element 102, whilst the element 105 is the farthest from the element 102 and is able to be engaged and driven by the work organ in its movement along the directions D1 and D2.

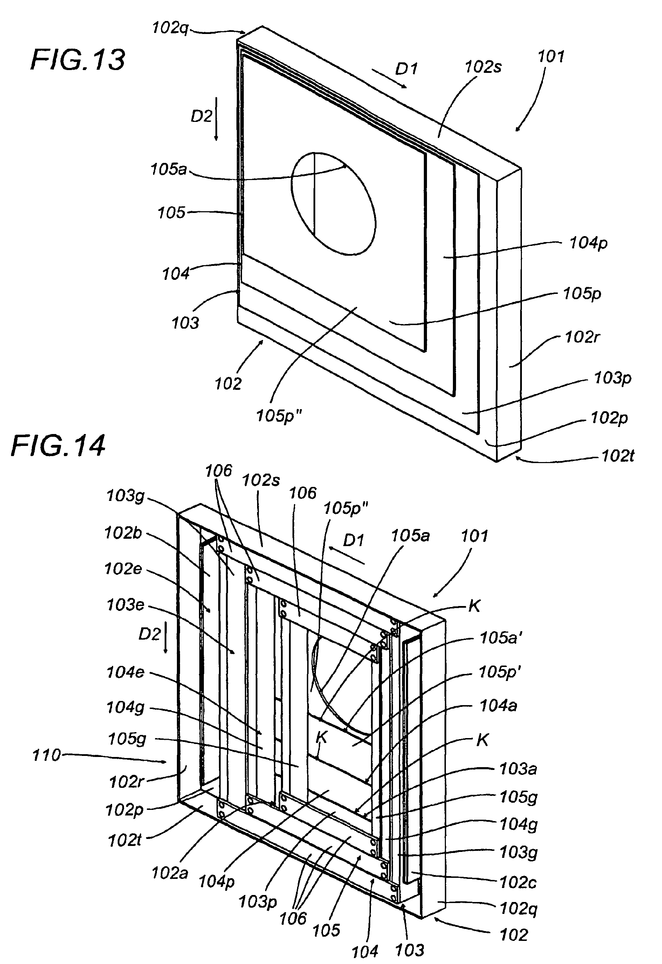

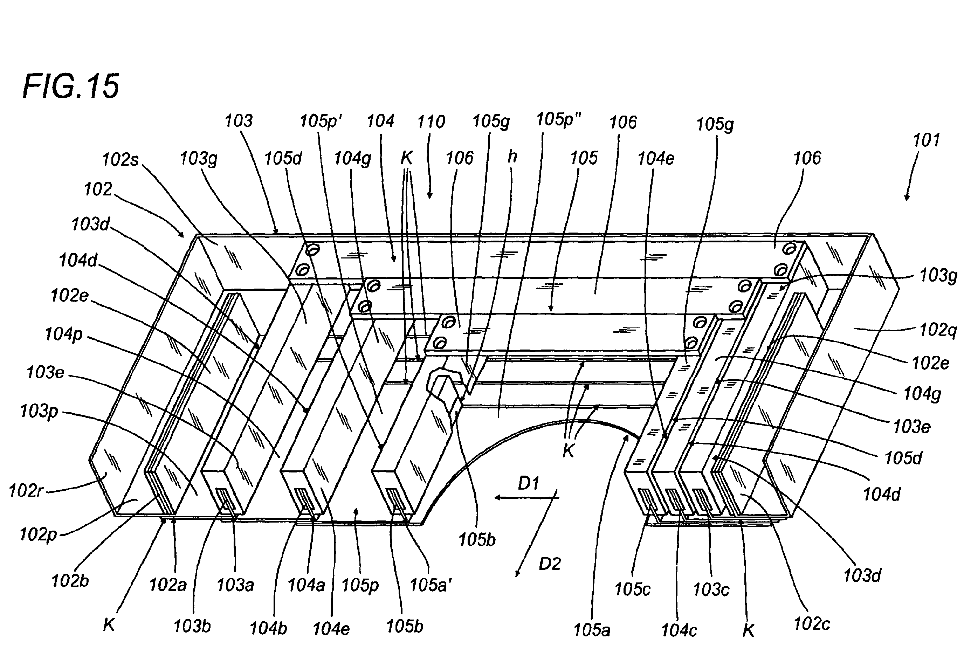

The cover elements 102, 103, 104, 105 comprise respective relatively thin covering planar panels 102p, 103p, 104p, 105p, and are preferably made of metallic material, for instance steel. As Figure 13 more clearly shows, of these panels, the panel 102p is oriented towards the machine whilst the panel 105p is oriented towards the aforementioned work zone and is superposed to the panel 104p, which is superposed to the panel 103p which, lastly, is superposed to the panel 102p. In particular, as shown in Figure 15, the panels 102p, 103p and 104p are defined by respective individual rectangular planar plates, whilst the panel 105p is defined by two rectangular planar plates 105p' and 105p", mutually superposed and fastened, whereof the plate 105p' is positioned in contact with the panel 104p, whilst the plate 105p" is positioned at the opposite side of the panel 104p relative to the plate 105p'. Moreover, the panels 102p, 103p, 104p and 105p are delimited peripherally by respective peripheral edges, parallel in twos to the direction D1 and D2.

The panel 102p has, according to the directions D 1 and D2, greater size than the panels 103p, 104p, 105p, and the latter panels have, also according to the directions D1 and D2, mutually decreasing size, from the movable cover element 103 closest to the element 102 to the movable cover element 105 farthest from the element 102.

As Figures 14, 15 and 16 more clearly show, each cover panel 102p, 103p, 104p, 105p has a respective central opening 102a, 103a, 104a, 105a, which confers to the panel 102p, 103p, 104p, 105p itself a frame conformation which allows the latter to be traversed by the work organ. Specifically, the openings 102a, 103a and 104a are rectangular shaped, whilst the opening 105a is circular shaped. In particular, the opening 105a is obtained in the plate 105p", is circumscribed by a rectangular opening 105a' obtained centrally in the plate 105p' and is delimited by a circular edge able to be fastened in sealed fashion onto the work organ.

The opening 102a of the element 102 defines an area to be covered by the movable cover elements 103, 104, 105 in their various work positions consequent to the movement of the work organ in the plane of Figures 11 and 12 along the directions D1 and D2. The openings 103a, 104a, 105a' and 105a of the movable elements 103, 104, 105 have, according to the directions D1 and D2, smaller size than the opening 102a of the element 102 and, in particular, they have, according to the directions D1 and D2, mutually decreasing sizes, from the movable cover element 103 closest to the element 102 to the movable cover element 105 farthest from the element 102. Moreover, the rectangular openings 102a, 103a, 104a and 105a'of the movable elements 103, 104, 105 are peripherally delimited by respective peripheral edges k parallel in twos to the directions D 1 and D2.

As shown in Figures 13, 14, 15 and 16 the cover element 102 comprises, in addition to the panel 102p, four rectangular lateral walls, indicated as 102q, 102r, 102s and 102t, which extend squarely from the panel 102p at the opposite side of the panels 103p, 104p and 105p and confer to the element 102 itself the shape of a parallelepiped box totally opened at the opposite side of the panel 102p. Specifically, the walls 102q and 102r are mutually opposite and extend parallel in the direction D2, whilst the walls 102s and 102t are mutually opposite and extend parallel in the direction D1. Lastly, as shown in Figures 14, 15 and 16, the cover element 102 comprises two elongated planar appendices, indicated as 102b and 102c, which develop along the peripheral edges k of the opening 102a that are parallel to the direction D2. Specifically, the appendix 102b faces and is parallel to the wall 102r, whilst the appendix 102c faces and is parallel to the wall 102q.

As shown in Figures 15, 16 and 17, each of the movable elements 103, 104, 105 comprises, in addition to the related panels 103p, 104p and 105p, two elongated T-shaped appendices, respectively indicated as 103b and 103c, 104b and 104c, 105b and 105c, which develop along the peripheral edges k of the respective openings 103a, 104a and 105a' which are parallel to the direction D2.

The appendices 103b and 103c, 104b and 104c, 105b and 105c extend squarely from the respective panels 103p, 104p, 105p towards the interior of the element 102, i.e., like the appendices 102b and 102c, they are oriented towards the zone to be protected. In particular, the appendices 103b and 103c, 104b and 104c, 105b and 105c develop prevalently in the direction D2 and parallel to the appendices 102b and 102c, and specifically, relative to the circular opening 105a, the appendices 103b, 104b and 105b are positioned on the same side as the appendix 102b, whilst the appendices 103c, 104c and 105c are positioned on the same side as the appendix 102c.

Each appendix 103b, 103c, 104b, 104c, 105b, 105c is coupled, in sliding fashion in the direction D2, to an elongated guiding and holding body 103g, 104g, 105g, which is oriented towards the part of the zone to be protected, has, in the direction D2, a length equal to the length of the lateral walls 102r and 102q of the element 102, and is in turn coupled in sliding fashion, in the direction D1, to the panel 102p whereon it is positioned in contact in correspondence with the face of the panel 102p which is positioned at the opposite side of the movable panels 103p, 104p and 105p.

As shown in Figures 15, 16 and 17, each elongated guiding and holding body 103g, 104g, 105g develops prevalently in the direction D2 and has, transversely to the direction D2, a section whose area borders a T shaped area, and specifically said cross section is complementary to the cross section of the related appendix 103b, 103c, 104b, 104c, 105b, 105c in such a way that the body 103g, 104g, 105g itself defines for the latter a sliding track in the direction D2. Lastly, the pairs of bodies 103g, 104g and 105g are mutually connected in rigid fashion by respective pairs of rectangular plates 106, which are positioned parallel to the panel 102p, develop prevalently in the direction D 1 and are fastened to the bodies 103g, 104g and 105g themselves in correspondence with their opposite ends in the direction D2.

The assembly of the elongated guiding and holding bodies 103g, 104g, 105g, of the appendices 103b, 103c, 104b, 104c, 105b, 105c and of the cover element 102 defines guiding and holding means 110, whose function, on one hand, is to couple in mutually sliding fashion the cover elements 102, 103, 104 and 105 in such a way as to follow the work organ in its operative movements and to cover the aforementioned zone to be protected by means of the set of panels 102p, 103p, 104p and 105p, and, on the other hand, is to hold the cover elements 102, 103, 104 and 105 respectively mutually serried in a pack configuration.

As Figures 14 and 15 more clearly show, the bodies 103g, 104g, 105g associated to each movable element 103, 104, 105 and the appendices 102b and 102c of the element 102 define the engagement and/or abutment elements to provide for driving and stopping the movable elements 103, 104, 105 along the direction D1. Specifically, the bodies 103g, 104g, 105g define, each, a face 103d, 104d, 105d for engagement with a corresponding abutment face 102e, 103e, 104e of an adj acent engagement and/or abutment element 102b, 102c, 103g, 104g.

In particular, the engagement face 103d, 104d, 105d of each body 103g, 104g, 105g is oriented towards the exterior of the corresponding opening 103a, 104a, 105a', whilst the face 102e of each appendix 102b and 102c is oriented towards the interior of the opening 102a and serves as an abutment and arrest face for the respective body 103g.

The appendices 103b, 103c, 104b, 104c, 105b, 105c relating to each movable panel 103p, 104p, 105p are delimited, each in the direction D2, by two opposite end walls h (whereof only one is shown in Figure 15) which are oriented towards the exterior of the corresponding opening 103a, 104a, 105a' and are able to engage in abutment the corresponding edges k, parallel to the direction D1, of the opening 102a, 103a, 104a of the adjacent panel 102p, 103p, 104p to drive and stop the movable elements 103, 104, 105 along the direction D2.

From the above description it is evident that the protective cover 101 is always completely closed from the part of the front of the work organ.

Advantageously, the cover 101 is extremely light because the movable elements 103, 104 and 105 are reduced almost totally to the movable panels 103p, 104p, 105p alone. Moreover, the driving movements between the respective cover elements 102, 103, 104 and 105 are transmitted in a simple and reliable manner and the cover 101 does not have, on the side of the front of the work organ, any groove, recess or the like able to collect even very fine work process residues.

Lastly, according to a variation not shown herein of the protective cover 101 described above, the cover elements 102, 103, 104 and 105 are provided with known cushioning elements, interposed between the elements 102,103, 104, and 105 according to the directions D 1 and D2.

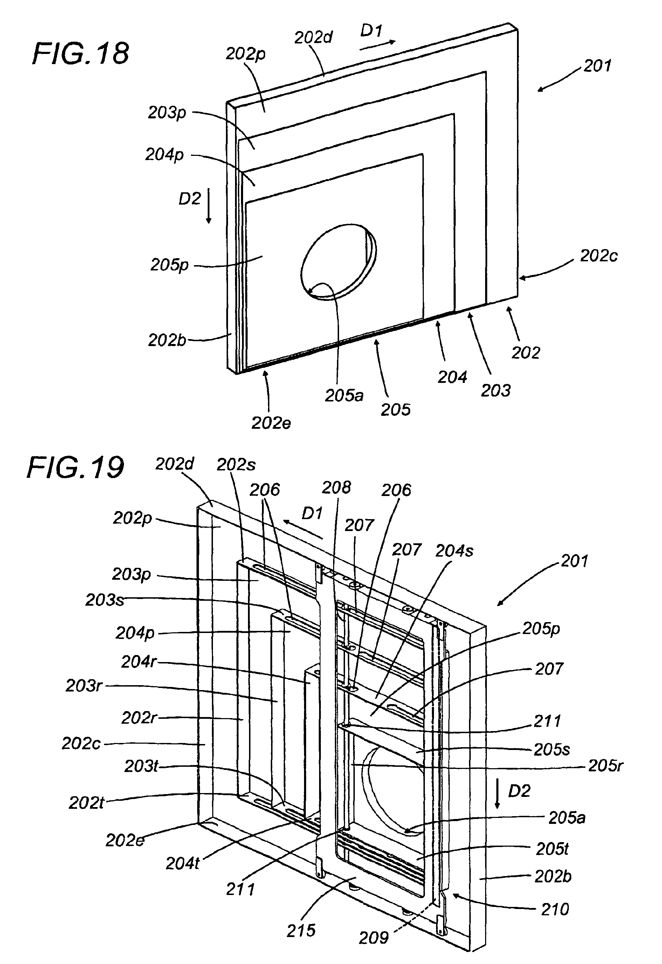

With reference to Figures 18 through 21, the number 201 indicates a variation of the protective cover 101 shown in Figures 11 through 17.

Similarly to the cover 101, the cover 201 can be associated to a work organ to follow its combined to and fro motions along two mutually orthogonal directions D1 and D2, maintaining covered and protected a corresponding area (not show) of the machine whereof the work organ itself is a part.

The work organ is, in particular, an operative organ of a machine tool (not shown), and presents a rear (not shown), whereby the organ itself projects in overhang from the machine tool, and a work front (not shown), positioned at the side opposite the rear relative to the cover 201. Specifically, when observing Figure 18, the rear of the work organ and the zone to be protected of the machine tool are positioned posteriorly to the cover 201, whilst the front of the work organ and the related work area are positioned towards the observer, anteriorly to the cover 201.

The cover 201 comprises a series of cover elements, mutually fastened and coupled in sliding fashion, which are in the form of a first cover element 202, able to be fastened (in a manner not shown herein) to the frame of the machine tool in correspondence with the aforementioned zone to be protected, and of a plurality of cover elements 203, 204, 205 movable relative to each other and relative to the element 202 according to the aforementioned directions D and D2 of motion of the work organ. In particular, the element 203 is the closest to the element 202, whilst the element 205 is the farthest from the element 202 and is able to be engaged and driven by the work organ in its movement along the directions D1 and D2.

The cover elements 202, 203, 204, 205 comprise respective relatively thin covering planar panels 202p, 203p, 204p, 205p, and are preferably made of metallic material, for instance steel. Of these panels, the panel 202p is oriented towards the machine whilst the panel 205p is oriented towards the aforementioned work zone and is superposed to the panel 204p, which is superposed to the panel 203p which, lastly, is superposed to the panel 202p. Moreover, the panels 202p, 203p, 204p, 205p are peripherally delimited by respective peripheral edges parallel in twos to the directions D1 and D2.

The panel 202p has, according to the directions D1 and D2, greater size than the panels 203p, 204p, 205p, and the latter panels have, also according to the directions D1 and D2, mutually decreasing size, from the movable cover element 203 closest to the element 202 to the movable cover element 205 farthest from the element 202.

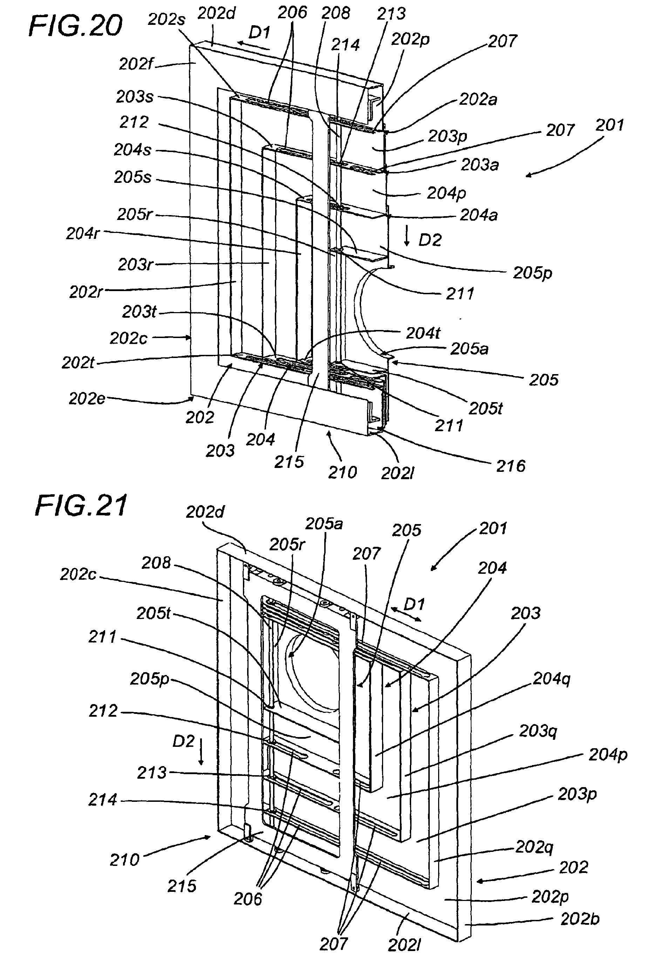

As Figure 20 more clearly shows, each cover panel 202p, 203p, 204p, 205p has a respective central opening 202a, 203a, 204a, 205a, which confers to the panel 202p, 203p, 204p, 205p itself a frame conformation which allows the latter to be traversed by the work organ. Specifically, the openings 202a, 203a and 204a have rectangular shapes, whilst the opening 205a has a circular shape. In particular, the opening 205a is obtained centrally in the plate 205p and is delimited by a circular edge from which an annular flange able to be fastened in sealed fashion onto the work organ extends towards the work zone.

The opening 202a of the element 202 defines an area to be covered by the movable cover elements 203, 204, 205 in their various work positions consequent to the movement of the work organ along the directions D1 and D2. The openings 203a, 204a and 205a of the movable elements 203, 204, 205 have, according to the directions D1 and D2, smaller size than the opening 202a of the element 202 and, in particular, they have, according to the directions D1 and D2, mutually decreasing sizes, from the movable cover element 203 closest to the element 202 to the movable cover element 205 farthest from the element 202.

As shown in Figures 19, 20 and 21, the cover element 202 comprises, in addition to the panel 202p, four rectangular lateral walls, indicated as 202b, 202c, 202d and 202e, which extend squarely from the panel 202p at the opposite side of the panels 203p, 204p and 205p, i.e. towards the area to be protected. Specifically, the walls 202b and 202c are mutually opposite and extend parallel in the direction D2, whilst the walls 202d and 202e are mutually opposite and extend parallel in the direction D1. Moreover, as shown only in Figure 20, the cover element 202 comprises a rectangular annular wall 202f, which is fastened to the walls 202b, 202c, 202d and 202e along the respective edges in a position in which the wall 202f itself is parallel to the panel 202p.

The walls 202b, 202c, 202d, 202e and 202f confer to the element 202 itself the shape of a parallelepiped box totally opened at the opposite side of the panel 202p, in correspondence with the interior edges of the wall 202f.

The cover element 202 further comprises four more rectangular lateral walls, indicated as 202q, 202r, 202s and 202t, which extend squarely from the panel 202p, along the edges of the respective opening 202a, from the opposite side of the panels 203p, 204p, 205p, i.e. towards the area to be protected. Specifically, the walls 202q and 202r are mutually opposite and extend parallel in the direction D2, whilst the walls 202s and 202t are mutually opposite and extend parallel in the direction D1. The walls 202q and 202r are positioned internally between the walls 202b and 202c, whilst the walls 202s and 202t are positioned internally between the walls 202d and 202e.

The cover element 203 comprises, in addition to the panel 203p, four rectangular lateral walls, indicated as 203q, 203r, 203s and 203t, which extend squarely from the panel 203p, along the edges of the respective opening 203a, at the opposite side of the panels 203p, 204p and 205p, i.e. towards the zone to be protected, and confer to the element 203 itself the shape of a parallelepiped box totally open from the opposite side of the panel 203p. Specifically, the walls 203q and 203r are mutually opposite and extend parallel in the direction D2, whilst the walls 203s and 203t are mutually opposite and extend parallel in the direction D1. The walls 203q and 203r are positioned internally between the walls 202q and 202r, whilst the walls 203s and 203t are positioned internally between the walls 202s and 202t.

In the same way, the cover element 204 comprises, in addition to the panel 204p, four rectangular lateral walls, indicated as 204q, 204r, 204s and 204t, which extend squarely from the panel 204p, along the edges of the respective opening 204a, at the opposite side of the panels 202p, 203p and 204p, i.e. towards the zone to be protected, and confer to the element 204 itself the shape of a parallelepiped box totally open from the opposite side of the panel 204p. Specifically, the walls 204q and 204r are mutually opposite and extend parallel in the direction D2, whilst the walls 204s and 204t are mutually opposite and extend parallel in the direction D1. The walls 204q and 204r are positioned internally between the walls 203q and 203r, whilst the walls 204s and 204t are positioned internally between the walls 203s and 203t.

The cover element 205 comprises, in addition to the panel 205p, four rectangular lateral walls, indicated as 205q, 205r, 205s and 205t, which extend squarely from the panel 205p, along the edges of the respective opening 205a, at the opposite side of the panels 202p, 203p and 204p, i.e. towards the zone to be protected, and confer to the element 205 itself the shape of a parallelepiped box totally open from the opposite side of the panel 205p. Specifically, the walls 205q and 205r are mutually opposite and extend parallel in the direction D2, whilst the walls 205s and 205t are mutually opposite and extend parallel in the direction D1. The walls 205q and 205r are positioned internally between the walls 204q and 204r, whilst the walls 205s and 205t are positioned internally between the walls 204s and 204t. Moreover, the walls 205q, 205r, 205s and 205t delimit on the panel 205p a rectangular area within which is centrally obtained the opening 205a.

The walls 202s, 202t, 203s, 203t, 204s and 204t have, each, a pair of tracks 206 and 207 defined, specifically, by elongated slots 206 and 207 developing in the direction D1 of greater development of the walls 202s, 202t, 203s, 203t, 204s and 204t themselves. The two slots 206 and 207 of each pair of slots 206 and 207 are mutually aligned and extend along the respective wall 202s, 202t, 203s, 203t, 204s, symmetrically starting from a central area of the wall 202s, 202t, 203s, 203t, 204s and 204t itself.

Each of the walls 205s and 205t is traversed, in correspondence with its opposite ends according to the direction D1, by two rods 208 and 209, which are mutually distanced and develop parallel in the direction D2. Specifically, each of the rods 208 and 209 is coupled in sliding fashion to a first pair of cursors 211, which are fastened to the ends of the respective walls 205s and 205t.

The rod 208 is, furthermore, coupled in sliding fashion to a second pair of cursors 212, in turn mounted in sliding fashion on the slots 206 of the respective walls 204s and 204t, to a third pair of cursors 213, in turn mounted in sliding fashion on the slots 206 of the respective walls 203s and 203t, and to a fourth pair of cursors 214, in turn mounted in sliding fashion on the slots 206 of the respective walls 202s and 202t.

Similarly, the rod 209 is also coupled in sliding fashion to a second pair of cursors 212, in turn mounted in sliding fashion on the slots 207 of the respective walls 204s and 204t, to a third pair of cursors 213, in turn mounted in sliding fashion on the slots 207 of the respective walls 203s and 203t, and to a fourth pair of cursors 214, in turn mounted in sliding fashion on the slots 207 of the respective walls 202s and 202t.

The rods 208 and 209 are rigidly supported by a carriage 215, which is freely movable only in the direction D1 within a sliding track 216 defined by the assembly of the panel 202p and of the walls 202d, 202e and 202f.

The assembly of the track 216, of the carriage 215, of the rods 208 and 209, of the cursors 211, 212, 213 and 214, and of the slots 206 and 207 defines guiding and holding means 210, whose function, on one hand, is to couple in mutually sliding fashion the cover elements 202, 203, 204 and 205 in such a way as to follow the work organ in its operative movements and to cover the aforementioned zone to be protected by means of the set of panels 202p, 203p, 204p and 205p, and, on the other hand, is to hold the cover elements 202, 203, 204 and 205 respectively mutually serried in a pack configuration.

The walls 202q, 203q, 204q, 205q, 202r, 203r, 204r, 205r define engagement and/or abutment elements to provide for driving and arresting the movable elements 203, 204, 205 along the direction D1. Alternatively, the aforesaid arresting and/or abutting function can be served by the end stop extremities of the slots 206 and 207 and by the rods 208 and 209.

Lastly, the walls 202s, 203s, 204s, 205s, 202t, 203t, 204t, 205t define engagement and/or abutment elements to provide for driving and arresting the movable elements 203, 204, 205 along the direction D2 and, in particular, along the rods 208 and 209.

From the above description it is evident that the protective cover 201 is always completely closed from the part of the front of the work organ and does not have, on the side of the front of the work organ, any groove, recess or the like able to collect even very fine work process residues.

Lastly, according to a variation not shown herein of the protective cover 201 described above, the cover elements 202, 203, 204 and 205 are provided with known cushioning elements, interposed between the elements 202, 203, 204, and 205 according to the directions D1 and D2.

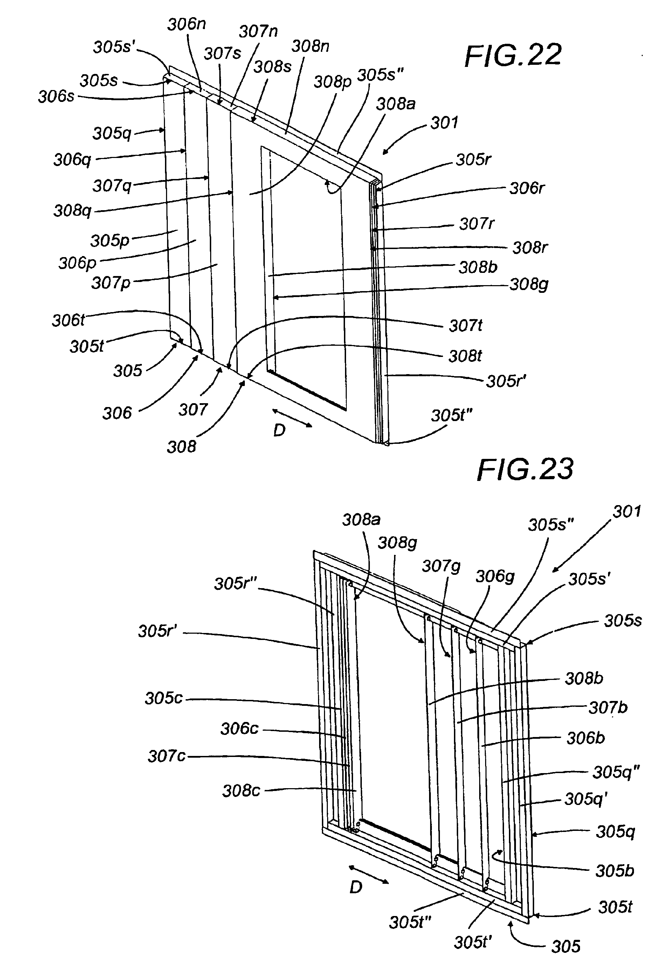

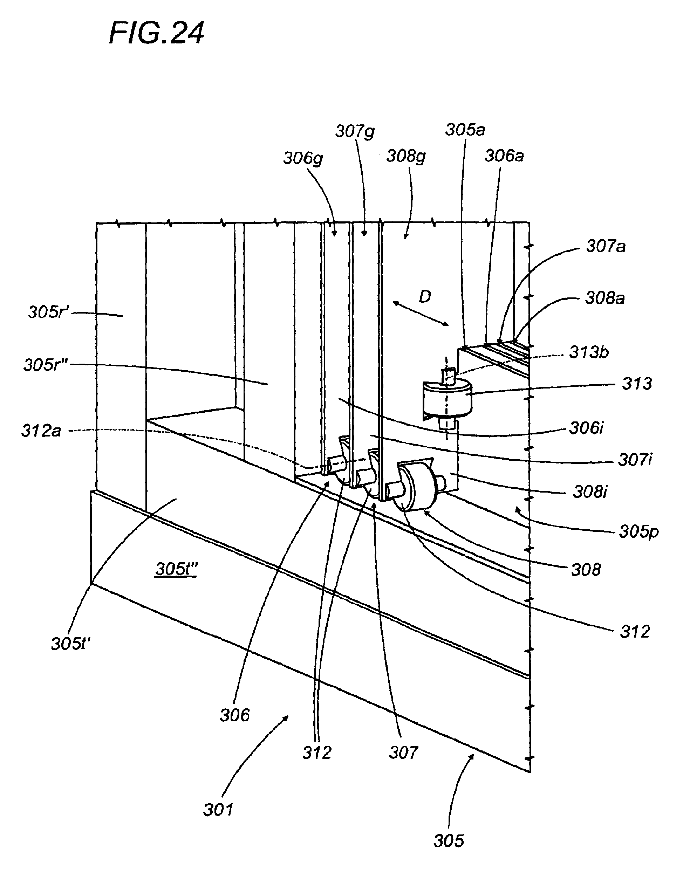

With reference to Figures 22 through 24, the number 301 indicates a covering and protecting device for machines or plants comprising a work organ (not shown) movable according to a single determined linear direction D.

The cover 301 can be associated to the work organ to follow the to and fro movements thereof along the direction D maintaining covered and protected a corresponding area (not shown) of the machine or of the plant.

The organ is, in particular, an operative organ of a machine tool (not shown), and presents a rear, whereby the organ itself projects in overhang from the machine tool, and a work front positioned opposite to the rear relative to the cover 301.

The cover 301 comprises a series of covering elements, mutually fastened and coupled in sliding fashion, which are in the form of a first cover element 305, able to be fastened (in a manner that is not shown herein) to the frame of the machine tool in correspondence with the aforesaid zone (not shown) to be protected, and of a plurality of cover elements 306, 307, 308 movable relative to each other and relative to the element 305 according to the aforementioned direction D of motion of the work organ. In particular, the element 306 is the closest to the element 305, whilst the element 308 is the farthest from the element 305 and is able to be engaged and driven by the work organ in the motion thereof along the direction D.

Each cover element 305, 306, 307, 308 has a respective rectangular opening 305a, 306a, 307a, 308a for the passage of the work organ.

The opening 305a of the element 305 defines an area to be covered by the movable cover elements 306, 307, 308 in their various work positions consequent to the movement of the work organ along the direction D.

The openings 305a, 306a, 307a, 308a all have the same size along a direction orthogonal to the direction D, whilst the openings 306a, 307a, 308a of the movable elements 306, 307, 308 have, according to the direction D, smaller size than the opening 305a. In particular, the openings 306a; 307a, 308a have, according to the direction D, mutually decreasing size, from the movable cover element 306 closest to the element 305 to the movable cover element 308 farthest form the element 305.

The cover elements 305, 306, 307, 308 comprise respective cover panels 305p, 306p, 307p, 308p, and are preferably made of metallic material, for instance steel.

In particular, the panels 305p, 306p, 307p, 308p are defined by respective relatively thin planar plates and are delimited, each, by two edges 305s, 305t, 306s, 306t, 307s, 307t, 308s, 308t, mutually opposite and parallel to the direction D, and by two edges 305q, 305r, 306q, 306r, 307q, 307r, 308q, 308r, mutually opposite and transverse to the direction D.

The panel 305p faces the zone to be protected and, on the side of the zone to be protected, supports two prismatic bars 305q' and 305r' with square cross section, mutually parallel and developing flush along the respective edges 305q and 305r. Also on the side of the zone to be protected, and between the bars 305q' and 305r', the panel 305p supports two other prismatic bars 305s' and 305t' with square cross section, mutually parallel and developing flush along the respective 305s and 305t. From the bars 305s' and 305t' extend respective planar rectangular appendages 305s" and 305t", which develop prevalently in the direction D, parallel to the panel 305p, and define with the bars 305q', 305r', 305s and 305t a frame of the element 305 which faces the zone to be protected. Between the bars 305s' and 305t', orthogonal to the bars 305s' and 305t' themselves, extend two additional prismatic bars 305q", 305r" with square cross section, which are positioned between the bars 305q', 305r' and delimit the opening 305a in the direction D.

The panel 308p is oriented towards a work zone within which the work organ operates and it is superposed to the panel 307p, which is superposed to the panel 306p which, lastly, is superposed to the panel 305p.

The panel 305p has, according to the direction D, greater size than the panels 306p, 307p, 308p, and the latter have, also according to the direction D, mutually decreasing size, from the movable cover element 306 closest to the element 305 to the movable cover element 308 farthest from the element 305.

Each of the movable elements 306, 307, 308 comprises a first and a second tab 306b, 306c, 307b, 307c, 308b, 308c, which extend squarely from the respective panels 306p, 307p, 308p through the opening 305a of the element 305. Specifically, the tabs 306b, 306c, 307b, 307c, 308b, 308c develop according to respective planes, transverse to the direction D, coinciding with opposite longitudinal edges of the related openings 306a, 307a, 308a.

The tabs 306b, 306c, 307b, 307c, 308b, 308c of each movable element 306, 307, 308 define, each, a face 306d, 307d, 308d for the engagement with a corresponding abutment face 305e, 306e, 307e of an adjacent covering element 305, 306, 307 to provide for driving and arresting the elements 306, 307, 308 themselves along the direction D. In particular, the engagement face 306d, 307d, 308d of each tab 306b, 306c, 307b, 307c, 308b, 308c is oriented towards the exterior of the corresponding opening 306a, 307a, 308a.

The arrest of the elements 306, 307, 308 is assured by two longitudinally opposite abutment faces 305b, 305c of the panel 305p, which surfaces 305b, 305c are defined by the two faces of the bars 305q" and 305r" that are oriented towards the interior of the opening 305a; whilst the faces of the tabs 308b, 308c which are oriented towards the interior of the opening 308a define surfaces for the direct engagement and driving of the element 308 by the work organ, which extends through the opening 308a and is fastened in sealed fashion (in a known manner, not shown herein) to the element 308 itself.

From each tab 306b, 306c, 307b, 307c, 308b, 308c extends in coplanar and symmetrical fashion a respective planar appendage 306i, 307i and 308i, which has a greater length than the length of the respective tab 306b, 306c, 307b, 307c, 308b, 308c according to a direction transverse to the direction D and forms with the tab 306b, 306c, 307b, 307c, 308b, 308c itself a planar, substantially "T" shaped wall 306g, 307g, 308g. All the aforesaid planar walls 306g, 307g, 308g have the same size and each appendage 306i, 307i, 308i defines two tabs of the respective wall 306g, 307g, 308g, each of which is coupled in sliding fashion to the element 305 by means of a pair of rollers 312 and 313. Specifically, a first of the two rollers, the roller 312, is pivotally supported by the respective tab to rotate about an axis 312a orthogonal to the panels 305p, 306p, 307p and 308p and to roll on the respective bar 305s', 305t', whilst the second roller 313 of the aforesaid pair is pivotally supported by the respective tab to rotate about an axis 313b, parallel to the panels 305p, 306p, 307p and 308p and transverse to the direction D, and to roll directly on the face of the panel 305p that is oriented towards the zone to be protected.

The walls 306g, 307g, 308g constitute portions for latching the elements 306, 307 and 308 to the element 305. Said latching portions are oriented towards the zone to be protected relative to the panel 305p and define, together with the element 305 and with the rollers 312 and 313, guiding and holding means 310 for mutually coupling the elements 305, 306, 307 and 308 in sliding fashion.

Moreover, the element 306 has two additional latching appendages 306n, which extend from the respective edges 306s, 306t of the panel 306p for enveloping and latching the panel 305p around the respective edges 305s and 305t. Specifically, each appendage 306n is a planar appendage transverse to the panel 306p, which bears in sliding fashion on the respective bar 305s', 305t' of the element 305.

Similarly, the element 307 has two additional latching appendages 307n, which extend from the respective edges 307s, 307t of the panel 307p for enveloping and latching the panel 306p around the respective edges 306s and 306t. Specifically, each appendage 307n is a planar appendage transverse to the panel 307p, which bears in sliding fashion on the respective appendage 306n of the element 306.

Similarly, lastly, the element 308 has two additional latching appendages 308n, which extend from the respective edges 308s, 308t of the panel 308p for enveloping and latching the panel 307p around the respective edges 307s and 307t. Specifically, each appendage 308n is a planar appendage transverse to the panel 308p, which bears in sliding fashion on the respective appendage 307n of the element 307.

Although Figures 22 through 24 do not show any cushioning element, it is clear that they can equally be present, for instance in the form shown in Figures 8 and 9.

From the above description it is evident that the cover 301 is completely closed from the side of the work front of the organ. Advantageously, moreover, the cover 301 does not have, from the side of the work front of the organ, any groove, recess or the like able to collect even very fine work process residues. The cover 301 is therefore suitable both for work organs movable in the horizontal direction and for work organs movable in the vertical direction.

Lastly, it is appropriate to stress that the invention thus conceived can be subject to numerous modifications and variations, without thereby departing from the scope of the claims.

## Claims

1. Protective cover for a work organ movable along a determined path according to at least a determined direction (D; D1 D2) to operate within a work zone and presenting a rear, whereby the organ projects in overhang from a machine tool, and a work front opposite to the rear ; the protective cover (1; 101; 201; 301) comprising a series of cover elements (5, 6, 7, 8; 102, 103, 104, 105; 202, 203, 204, 205; 305, 306, 307, 308), mutually coupled in sliding fashion and in the form of a first cover element (5; 102; 202; 305), able to be fastened to said machine, a second movable cover element (8; 105; 205; 308), operatively connected to said work organ, and, one or more intermediate cover elements (6, 7; 103, 104, 203, 204; 306, 307), movable relative to each other and relative to said first and second cover element (5, 8; 102, 105; 202, 205; 305, 308); each said cover element (5, 6, 7, 8; 102, 103, 104, 105; 202, 203, 204, 205; 305, 306, 307, 308) presenting a respective opening (5a, 6a, 7a, 8a; 102a, 103a, 104a, 105a; 202a, 203a, 204a, 205a; 305a, 306a, 307a, 308a) for the passage of said work organ; the opening (5a; 102a; 202a; 305a) of the first cover element (5; 102; 202; 305) being covered by the remaining movable cover elements (6, 7, 8; 103, 104, 105; 203, 204, 205; 306, 307, 308); the protective cover (1; 101; 201; 301) further comprising guiding and holding means (10; 110; 210; 310) to couple in mutually sliding fashion said cover elements (5, 6, 7, 8; 102, 103, 104, 105; 202, 203, 204, 205; 305, 306, 307, 308) of said series of cover elements (5, 6, 7, 8; 102, 103, 104, 105; 202, 203, 204, 205; 305, 306, 307, 308) in such a way as to cover said work organ in its movements along the determined path; the protective cover (1; 101; 201; 301) being **characterised in that**, relative to said first cover element (5; 102 202; 305), said guiding and holding means (10; 110; 210; 310) are oriented towards the rear of the work organ; and **in that** said second cover element (8; 105; 205; 308) is proximate and the first cover element (5; 102; 202; 305) is distal to the work front of the work organ.

2. Cover as claimed in claim 1, **characterised in that** said guiding and holding means (10; 310) comprise, for each said movable cover element (6, 7, 8; 306, 307, 308), at least a portion (6g, 7g, 8g; 6h, 7h, 8h; 6i, 7i, 8i; 6m, 6n, 7m, 7n, 8m, 8n; 306g, 307g, 308g) of the element (6, 7, 8; 306, 307, 308) itself for latching with at least another cover element (5, 6, 7; 305) of said series of cover elements (5, 6, 7, 8; 305, 306, 307, 308); said latching portion (6g, 7g, 8g; 6h, 7h, 8h; 6i, 7i, 8i; 6m, 6n, 7m, 7n, 8m, 8n; 306g, 307g, 308g) being oriented towards the zone to be protected.

3. Cover as claimed in claim 2, **characterised in that** said openings (6a, 7a, 8a; 306a, 307a, 308a) of said movable cover elements (6, 7, 8, 306, 307, 308) have mutually decreasing sizes, from the movable cover element (6; 306) closest to said first cover element (5; 305) to the movable cover element (8; 308) farthest from said first cover element (5 305).

4. Cover as claimed in claim 2 or 3, **characterised in that** said movable cover elements (6, 7, 8; 306, 307, 308) have mutually decreasing sizes, from the movable cover element (6; 306) closest to said first cover element (5; 305) to the movable cover element (8; 308) farthest from said first cover element (5; 305).

5. Cover as claimed in any of the claims 2 to 4, **characterised in that** each said movable cover element (6, 7, 8; 306, 307, 308) has a portion (6d, 7d, 8d) for engaging with a corresponding abutment portion (5e, 6e, 7e) of an adjacent cover element (5, 6, 7; 305, 306, 307) to provide for the driving and arresting of said movable cover elements (6, 7, 8; 306, 307, 308) along said linear direction (D) of motion of said work organ (2).

6. Cover as claimed in any of the claims 2 to 5, **characterised in that** said cover elements (5, 6, 7, 8) comprise respective planar cover plates (5p, 6p, 7p, 8p), mutually superposed, which have a first and a second longitudinally opposite flaps (5f', 5f", 6f, 6f', 7f, 7f', 8f, 8f'), mutually connected by longitudinal strips (5s', 5s", 6s', 6s", 7s', 7s", 8s', 8s") bordering and defining said passage openings (5a, 6a, 7a, 8a).

7. Cover as claimed in any of the claims 2 to 6, **characterised in that** said guiding and holding means (10) define means for the telescopic coupling between said cover elements (5, 6, 7, 8) defining said series of cover elements (5, 6, 7, 8).

8. Cover as claimed in claim 7, **characterised in that** it has a plane (A) of substantial symmetry coinciding with a median plane of said first cover element (5).

9. Cover as claimed in any of the claims 2 to 6, **characterised in that** said guiding and holding means (10; 310) comprise, for each said movable cover element (6, 7, 8; 306, 307, 308), at least a portion (6i, 7i, 8i; 6m, 6n, 7m, 7n, 8m, 8n; 306g, 307g, 308g) of the element (6, 7, 8; 306, 307, 308) itself for latching with said first cover element (5; 305); said latching portion (6i, 7i, 8i; 6m, 6n, 7m, 7n, 8m, 8n; 306g, 307g, 308g) being oriented towards the zone to be protected.

10. Cover as claimed in any of the claims 2 to 9, **characterised in that** said guiding and holding means (10; 310) comprise said first cover element (5, 305).

11. Cover as claimed in any of the claims 2 to 10, **characterised in that** it comprises cushioning means (11) interposed between said cover elements (5, 6, 7, 8) of said series of cover elements (5, 6, 7, 8).

12. Cover as claimed in claim 1, **characterised in that** said guiding and holding means (110) comprise, for each said movable cover element (104, 105), at least a guiding and holding element (103g, 104g, 105g) coupled in sliding fashion both to said first cover element (102), along a first a direction of relative sliding (D1) parallel to said plane, and to the movable cover element (103, 104, 105) itself, along a second direction (D2) of relative sliding parallel to said plane and orthogonal to said first direction (D1).

13. Cover according to claim 1 wherein said cover elements (102, 103, 104, 105) comprise respective planar covering panels (102p, 103p, 104p, 105p), mutually superposed and presenting said passage openings (102a, 103a, 104a, 105a); said planar covering panels (103p, 104p, 105p) of the movable cover elements (103, 104, 105) being positioned on the opposite side of the rear of the work organ relative to said planar covering panel (102p) of the first cover element (102).

14. Cover as claimed in claim 13, **characterised in that** said guiding and holding means (110) comprise, for each said movable cover element (103, 104, 105), at least a guiding and holding element (103g, 104,g, 105g) coupled in sliding fashion both to said first cover element (102), along a first direction of relative sliding (D1) parallel to said plane, and to said movable cover element (103, 104, 105) along a second direction of relative sliding (D2) parallel to said plane and orthogonal to said first direction (D1).

15. Cover as claimed in claim 12 or 14, **characterised in that** said guiding and holding element (103g, 104g, 105g) is oriented towards the rear of the work organ.

16. Cover as claimed in claim 15, **characterised in that** said guiding and holding element (103g, 104g, 105g) is positioned on the opposite side of the related said movable cover element (103, 104, 105) relative to said first cover element (102).

17. Cover as claimed in any of the claims 12 to 16, **characterised in that** said guiding and holding means (110) comprise, for each said movable cover element (103, 104, 105) at least a first element (103b, 103c, 104b, 104c, 105b, 105c) for engaging at least a corresponding first abutment element (102p, 103p, 104p) of an adjacent cover element (102, 103, 104) to provide for driving and arresting said movable cover elements (103, 104, 105) along said second direction (D2).

18. Cover as claimed in claim 17, **characterised in that** each said movable cover element (103, 104, 105) has at least a first portion (h) for engaging with at least a corresponding first abutment portion (k) of an adjacent cover element (102, 103, 104) to provide for driving and arresting said movable cover elements (103, 104, 105) along said second direction (D2).

19. Cover as claimed in any of the claims 12 through 18, **characterised in that** said guiding and holding means (110) comprise, for each said movable cover element (103, 104, 105), at least a second element (103g, 104g, 105g) for engaging at least a corresponding second abutment element (102b, 102c, 103g, 104g) of an adjacent cover element (102, 103, 104) to provide for driving and arresting said movable cover elements (103, 104, 105) along said first direction (D1).

20. Cover as claimed in claim 19, **characterised in that**, for each said movable cover element (103, 104, 105), said second engagement element (103g, 104g, 105g) and second abutment element (103g, 104g) are defined by the respective guiding and holding element (103g, 104g, 105g).

21. Cover as claimed in any of the claims 12 to 20, **characterised in that** said guiding and holding element (103g, 104g, 105g) comprises an elongated guiding body (103g, 104g, 105g) developing prevalently in said second direction (D2) and presenting a cross section bordering a "T" shaped area.

22. Cover as claimed in claims 19 and 21, **characterised in that** said elongated guiding body (103g, 104g, 105g) has at least a second portion (103d, 104d, 105d) for engaging at least a corresponding second abutment portion (102e, 103e, 104e) of a said second adjacent abutment element (102b, 102c, 103g, 104g) to provide for driving and arresting said movable cover elements (103, 104, 105) along said first direction (D1).

23. Cover as claimed in claim 21, **characterised in that** each said movable cover element (103, 104, 105) has at least an elongated appendage (103b, 103c, 104b, 104c, 105b, 105c) developing prevalently in said second direction (D2) and presenting a "T" shaped cross section; said appendage (103b, 103c, 104b, 104c, 105b, 105c) being coupled to said elongated guiding body (103g, 104g, 105g) to slide relative to the body (103g, 104g, 105g) itself according to said second direction (D2).

24. Cover as claimed in claim 23, **characterised in that** said guiding and holding means (110) comprise said first cover element (102) and said elongated appendages (103b, 103c, 104b, 104c, 105b, 105c) of said movable cover elements (103, 104, 105).

25. Cover as claimed in claim 13, **characterised in that** said guiding and holding means (210) comprise a first and a second rod (208, 209) mutually distanced and parallel and coupled in sliding fashion to said cover elements (202, 203, 204, 205) to guide said movable cover elements (203, 204, 205) in a movement of pursuit of said work organ according to a parallel second direction (D2) and to an orthogonal direction (D1) to said rods (208, 209).

26. Cover as claimed in claim 25, **characterised in that** said guiding and holding means (210) comprise a plurality of cursors (211, 212, 213, 214) supported by said cover elements (202, 203, 204, 205) and coupled in sliding fashion to said rods (208, 209).

27. Cover as claimed in claim 26, **characterised in that** said first cover element (202) and said intermediate cover elements (203, 204) have a plurality of tracks (206, 207) developing in the direction (D1) orthogonal to said rods (208, 209) and coupled in sliding fashion to respective said cursors (212, 213, 214).

28. Cover as claimed in claim 27, **characterised in that** said first cover element (202) and said intermediate cover elements (203, 204) have, each, two pairs of elongated slots (206, 207) defining respective said tracks (206, 207); each pair of slots (206, 207) being associated to a respective said rod (208, 209).

29. Cover as claimed in claim 28, **characterised in that** said guiding and holding means (210) comprise a carriage (215) movable in the direction (D1) orthogonal to said rods (208, 209) and rigidly fastened to the rods (208, 209) themselves.

30. Cover as claimed in claim 29, **characterised in that** said first cover element (202) has a track (216) for the sliding of said carriage (215).

31. Cover as claimed in claim 9, **characterised in that** said guiding and holding means (310) comprise, for each said movable cover element (306, 307, 308), at least a roller (312; 313) pivotally supported by the respective said portion (306g, 307g, 308g) for latching with said first cover element (305); said roller (312, 313) engaging said first cover element (305) in a rolling motion.

## Patentansprüche

1. Schutzabdeckung für ein Arbeitsorgan, das entlang einer vorgegebenen Bahn nach wenigstens einer bestimmten Richtung (D; D1, D2) beweglich ist, um innerhalb eines Arbeitsbereiches zu arbeiten, und das eine Rückseite aufweist, wodurch das Organ im Überhang von einer Werkzeugmaschine hervorsteht, und eine Arbeitsseite entgegengesetzt von der Rückseite; wobei die Schutzabdeckung (1; 101; 201; 301) eine Serie von Abdeckelementen (5, 6, 7, 8; 102, 103, 104, 105; 202, 203, 204, 205; 305, 306, 307, 308) aufweist, die in gleitender Weise miteinander verbunden sind, und zwar in der Form eines ersten Abdeckelementes (5; 102; 202; 305), in der Lage, an der genannten Maschine befestigt zu werden, eines zweiten, beweglichen Abdeckelementes (8; 105; 205; 308), betrieblich angeschlossen an das genannte Arbeitsorgan, und ein oder mehrere dazwischen liegende Abdeckelemente (6, 7; 103, 104; 203, 204; 306, 307), die im Verhältnis zueinander und zu dem genannten ersten und zweiten Abdeckelement (5, 8; 102, 105; 202, 205; 305, 308) beweglich sind; wobei jedes genannte Abdeckelement (5, 6, 7, 8; 102, 103, 104, 105; 202, 203, 204, 205; 305, 306, 307, 308) eine jeweilige Öffnung (5a, 6a, 7a, 8a; 102a, 103a, 104a, 105a; 202a, 203a, 204a, 205a; 305a, 306a, 307a, 308a) für den Durchlass des genannten Arbeitsorganes aufweist; wobei die Öffnung (5a; 102a; 202a; 305a) des ersten Abdeckelementes (5; 102; 202; 305) durch die verbleibenden beweglichen Abdeckelemente (6, 7, 8; 103, 104, 105; 203, 204, 205; 306, 307, 308) verdeckt ist; wobei die Schutzabdeckung (1; 101; 201; 301) ausserdem Führungs- und Haltemittel (10; 110; 210; 310) enthält, um in gleitender Weise die genannten Abdeckelemente (5, 6, 7, 8; 102, 103, 104, 105; 202, 203, 204, 205; 305, 306, 307, 308) der genannten Serie von Abdeckelementen (5, 6, 7, 8; 102, 103, 104, 105; 202, 203, 204, 205; 305, 306, 307, 308) auf solche Weise miteinander zu verbinden, dass das genannte Arbeitsorgan bei seiner Verschiebung entlang der vorgegebenen Bahn abgedeckt ist; wobei die Schutzabdeckung (1; 101; 201; 301) **dadurch gekennzeichnet ist, dass** im Verhältnis zu dem genannten ersten Abdeckelement (5; 102; 202; 305) die genannten Führungs- und Haltemittel (10; 110; 210; 310) zur Rückseite des Arbeitsorganes hin orientiert sind; und **dadurch**, dass das genannte zweite Abdeckelement (8; 105; 205; 308) dicht an, und das erste Abdeckelement (5; 102; 202; 305) entfernt von der Arbeitsseite des Arbeitsorganes liegt.

2. Abdeckung nach Patentanspruch 1, **dadurch gekennzeichnet, dass** die genannten Führungs- und Haltemittel (10; 310) für jedes bewegliche Abdeckelement (6, 7, 8; 306, 307, 308) wenigstens einen Abschnitt (6g, 7g, 8g; 6h, 7h, 8h; 6i, 7i, 8i; 6m, 6n, 7m, 7n, 8m, 8n; 306g, 307g, 308g) des Elementes (6, 7, 8; 306, 307, 308) selbst zum Koppeln mit wenigstens einem anderen Abdeckelement (5, 6, 7; 305) der genannten Serie von Abdeckelementen (5, 6, 7, 8; 305, 306, 307, 308) enthalten; wobei der genannte Kupplungsabschnitt (6g, 7g, 8g; 6h, 7h, 8h; 6i, 7i, 8i; 6m, 6n, 7m, 7n, 8m, 8n; 306g, 307g, 308g) zu dem zu schützenden Bereich hin ausgerichtet ist.

3. Abdeckung nach Patentanspruch 2, **dadurch gekennzeichnet, dass** die genannten Öffnungen (6a, 7a, 8a; 306a, 307a, 308a) der genannten beweglichen Abdeckelemente (6, 7, 8; 306, 307, 308) zueinander abnehmende Abmessungen haben, und zwar von dem beweglichen Abdeckelement (6; 306) am dichtesten an dem genannten ersten Abdeckelement (5; 305) bis zu dem beweglichen Abdeckelement (8; 308) am weitesten von dem genannten ersten Abdeckelement (5; 305).

4. Abdeckung nach Patentanspruch 2 oder 3, **dadurch gekennzeichnet, dass** die genannten beweglichen Abdeckelemente (6, 7, 8; 306, 307, 308) zueinander abnehmende Abmessungen haben, und zwar von dem beweglichen Abdeckelement (6; 306) am dichtesten an dem genannten ersten Abdeckelement (5; 305) bis zu dem beweglichen Abdeckelement (8; 308) am weitesten von dem genannten ersten Abdeckelement (5; 305).

5. Abdeckung nach einem beliebigen der Patentansprüche von 2 bis 4, **dadurch gekennzeichnet, dass** jedes genannte bewegliche Abdeckelement (6, 7, 8; 306, 307, 308) einen Abschnitt (6d, 7d, 8d) zum Verbinden mit einem entsprechenden Anschlagabschnitt (5e, 6e, 7e) eines angrenzenden Abdeckelementes (5, 6, 7; 305, 306, 307) hat, um das Mitnehmen und Anhalten der genannten beweglichen Abdeckelemente (6, 7, 8; 306, 307, 308) entlang der genannten linearen Verschieberichtung (D) des genannten Arbeitsorganes (2) vorzusehen.

6. Abdeckung nach einem beliebigen der Patentansprüche von 2 bis 5, **dadurch gekennzeichnet, dass** die genannten Abdeckelemente (5, 6, 7, 8) jeweilige ebene, übereinanderliegende Abdeckplatten (5p, 6p, 7p, 8p) enthalten, welche erste und zweite längsverlaufende und sich gegenüberliegende Flügel (5f', 5f", 6f', 6f', 7f, 7f", 8f', 8f") haben, die durch Längsstege (5s', 5s", 6s', 6s", 7s', 7s", 8s', 8s") miteinander verbunden sind, letztere die genannten Durchlassöffnungen (5a, 6a, 7a, 8a) eingrenzend und beschreibend.

7. Abdeckung nach einem beliebigen der Patentansprüche von 2 bis 6, **dadurch gekennzeichnet, dass** die genannten Führungs- und Haltemittel (10) Mittel für die teleskopartige Verbindung zwischen den genannten Abdeckelementen (5, 6, 7, 8) beschreiben, welche die genannte Serie von Abdeckelementen (5, 6, 7, 8) bilden.

8. Abdeckung nach Patentanspruch 7, **dadurch gekennzeichnet, dass** sie eine Ebene (A) von einer wesentlichen Symmetrie hat, die mit einer mittleren Ebene des genannten ersten Abdeckelementes (5) übereinstimmt.

9. Abdeckung nach einem beliebigen der Patentansprüche von 2 bis 6, **dadurch gekennzeichnet, dass** die Führungs- und Haltemittel (10; 310) für jedes genannte bewegliche Abdeckelement (6, 7, 8; 306, 307, 308) wenigstens einen Abschnitt (6i, 7i, 8i; 6m, 6n, 7m, 7n, 8m, 8n; 306g, 307g, 308g) des Elementes (6, 7, 8; 306, 307, 308) selbst zum Koppeln mit dem genannten ersten Abdeckelement (5; 305) enthalten; wobei der genannte Kupplungsabschnitt (6i, 7i, 8i; 6m, 6n, 7m, 7n, 8m, 8n; 306g, 307g, 308g) zu dem zu schützenden Bereich hin ausgerichtet ist.

10. Abdeckung nach einem beliebigen der Patentansprüche von 2 bis 9, **dadurch gekennzeichnet, dass** die genannten Führungs- und Haltemittel (10; 310) das genannte erste Abdeckelement (5; 305) enthalten.

11. Abdeckung nach einem beliebigen der Patentansprüche von 2 bis 10, **dadurch gekennzeichnet, dass** sie Puffermittel (11) enthält, eingesetzt zwischen den genannten Abdeckelementen (5, 6, 7, 8) der genannten Serie von Abdeckelementen (5, 6, 7, 8).

12. Abdeckung nach Patentanspruch 1, **dadurch gekennzeichnet, dass** die genannten Führungs- und Haltemittel (110) für jedes genannte bewegliche Abdeckelement (104, 105) wenigstens ein Führungs- und Halteelement (103g, 104g, 105g) enthalten, verbunden in gleitender Weise sei es mit dem genannten ersten Abdeckelement (102) entlang einer ersten Richtung (D1) der verhältnismässigen Verschiebung parallel zu der genannten Ebene, wie auch mit dem genannten beweglichen Abdeckelement (103, 104, 105) selbst entlang einer zweiten Richtung (D2) der verhältnismässigen Verschiebung parallel zu der genannten Ebene und rechtwinklig zu der genannten ersten Richtung (D1).

13. Abdeckung nach Patentanspruch 1, bei welcher die genannten Abdeckelemente (102, 103, 104, 105) jeweilige ebene Abdeckplatten (102p, 103p, 104p, 105p) enthalten, die übereinander liegen und die genannten Durchlassöffnungen (102a, 103a, 104a, 105a) aufweisen; wobei die genannten ebenen Abdeckplatten (103p, 104p, 105p) der beweglichen Abdeckelemente (103, 104, 105) auf der entgegengesetzten Seite von der Rückseite des Arbeitsorganes im Verhältnis zu den genannten ebenen Abdeckplatte (102p) des ersten Abdeckelementes (102) positioniert sind.

14. Abdeckung nach Patentanspruch 13, **dadurch gekennzeichnet, dass** die genannten Führungs- und Haltemittel (110) für jedes genannte bewegliche Abdeckelement (103, 104, 105) wenigstens ein Führungs- und Halteelement (103g, 104g, 105g) enthalten, verbunden in gleitender Weise mit dem genannten ersten Abdeckelement (102) entlang einer ersten Richtung (D1) der verhältnismässigen Verschiebung parallel zu der genannten Ebene, und mit dem genannten beweglichen Abdeckelement (103, 104, 105) entlang einer zweiten Richtung (D2) der verhältnismässigen Verschiebung parallel zu der genannten Ebene und rechtwinklig zu der genannten ersten Richtung (D1).

15. Abdeckung nach Patentanspruch 12 oder 14, **dadurch gekennzeichnet, dass** das genannte Führungs- und Halteelement (103g, 104g, 105g) zur Rückseite des Arbeitsorganes hin orientiert ist.

16. Abdeckung nach Patentanspruch 15, **dadurch gekennzeichnet, dass** das genannte Führungs- und Halteelement (103g, 104g, 105g) im Verhältnis zu dem genannten ersten Abdeckelement (102) auf der entgegengesetzten Seite des entsprechenden genannten beweglichen Abdeckelementes (103, 104, 105) positioniert ist.

17. Abdeckung nach einem beliebigen der Patentansprüche von 12 bis 16, **dadurch gekennzeichnet, dass** die genannten Führungs- und Haltemittel (110) für jedes genannte bewegliche Abdeckelement (103, 104, 105) wenigstens ein erstes Element (103b, 103c, 104b, 104c, 105b, 105c) zum Greifen von wenigstens einem entsprechenden ersten Anschlagelement (102p, 103p, 104p) eines angrenzenden Abdeckelementes (102, 103, 104) enthalten, um das Mitnehmen und Anhalten der genannten beweglichen Abdeckelemente (103, 104, 105) entlang der genannten zweiten Richtung (D2) vorzusehen.

18. Abdeckung nach Patentanspruch 17, **dadurch gekennzeichnet, dass** das genannte bewegliche Abdeckelement (103, 104, 105) wenigstens einen ersten Abschnitt (h) zum Verbinden mit wenigstens einem entsprechenden ersten Anschlagabschnitt (k) eines angrenzenden Abdeckelementes (102, 103, 104) aufweist, um das Mitnehmen und Anhalten der genannten beweglichen Abdeckelemente (103, 104, 105) entlang der genannten zweiten Richtung (D2) vorzusehen.

19. Abdeckung nach einem beliebigen der Patentansprüche von 12 bis 18, **dadurch gekennzeichnet, dass** die genannten Führungs- und Haltemittel (110) für jedes genannte bewegliche Abdeckelement (103, 104, 105) wenigstens ein zweites Element (103g, 104g, 105g) zum Greifen von wenigstens einem entsprechenden zweiten Anschlagelement (102b, 102c, 103g, 104g) eines angrenzenden Abdeckelementes (102, 103, 104) enthalten, um das Mitnehmen und Anhalten der genannten beweglichen Abdeckelemente (103, 104, 105) entlang der genannten ersten Richtung (D1) vorzusehen.

20. Abdeckung nach Patentanspruch 19, **dadurch gekennzeichnet, dass** für jedes genannte bewegliche Abdeckelement (103, 104, 105) das genannte zweite Greifelement (103g, 104g, 105g) und das zweite Anschlagelement (103g, 104g) durch das jeweilige Führungs- und Halteelement (103g, 104g, 105g) beschrieben sind.

21. Abdeckung nach einem beliebigen der Patentansprüche von 12 bis 20, **dadurch gekennzeichnet, dass** das genannte Führungs- und Halteelement (103g, 104g, 105g) einen verlängerten Führungskörper (103g, 104g, 105g) enthält, der sich vorwiegend in der genannten zweiten Richtung (D2) erstreckt und einen Querschnitt aufweist, der einen "T"-förmigen Bereich einfasst.

22. Abdeckung nach den Patentansprüchen 19 und 21, **dadurch gekennzeichnet, dass** der genannte verlängerte Führungskörper (103g, 104g, 105g) wenigstens einen zweiten Abschnitt (103d, 104d, 105d) zum Greifen von wenigstens einem entsprechenden zweiten Anschlagabschnitt (102e, 103e, 104e) eines genannten zweiten angrenzenden Anschlagelementes (102b, 102c, 103g, 104g) hat, um das Mitnehmen und Anhalten der genannten beweglichen Abdeckelemente (103, 104, 105) entlang der genannten ersten Richtung (D1) vorzusehen.

23. Abdeckung nach Patentanspruch 21, **dadurch gekennzeichnet, dass** jedes genannte bewegliche Abdeckelement (103, 104, 105) wenigstens einen verlängerten Ansatz (103b, 103c, 104b, 104c, 105b, 105c) hat, der sich vorwiegend in der genannten zweiten Richtung (D2) erstreckt und einen "T"-förmigen Querschnitt aufweist; wobei der genannte Ansatz (103b, 103c, 104b, 104c, 105b, 105c) an den genannten verlängerten Führungskörper (103g, 104g, 105g) gekoppelt ist, um im Verhältnis zu dem Körper (103g, 104g, 105g) selbst nach der genannten zweiten Richtung (D2) zu gleiten.

24. Abdeckung nach Patentanspruch 23, **dadurch gekennzeichnet, dass** die genannten Führungs- und Haltemittel (110) das genannte erste Abdeckelement (102) und die genannten verlängerten Ansätze (103b, 103c, 104b, 104c, 105b, 105c) der genannten beweglichen Abdeckelemente (103, 104, 105) enthalten.

25. Abdeckung nach Patentanspruch 13, **dadurch gekennzeichnet, dass** die genannten Führungs- und Haltemittel (210) eine erste und eine zweite Stange (208, 209) enthalten, die voneinander abstehend und parallel zueinander und in gleitender Weise an die genannten Abdeckelemente (202, 203, 204, 205) angeschlossen sind, um die genannten Abdeckelemente (203, 204, 205) in einer Verfolgungsbewegung des genannten Arbeitsorganes nach einer parallelen zweiten Richtung (D2) und in einer rechtwinkligen Richtung (D1) zu den genannten Stangen (208, 209) zu führen.

26. Abdeckung nach Patentanspruch 25, **dadurch gekennzeichnet, dass** die genannten Führungs- und Haltemittel (210) eine Anzahl von Gleitstücken (211, 212, 213, 214) enthalten, getragen durch die genannten Abdeckelemente (202, 203, 204, 205) und verbunden in gleitender Weise mit den genannten Stangen (208, 209).

27. Abdeckung nach Patentanspruch 26, **dadurch gekennzeichnet, dass** das genannte erste Abdeckelement (202) und die genannten dazwischen liegenden Abdeckelemente (203, 204) eine Anzahl von Führungen (206, 207) haben, die sich in der Richtung (D1) rechtwinklig zu den genannten Stangen (208, 209) erstrecken und in gleitender Weise mit den jeweiligen genannten Gleitstücken (212, 213, 214) verbunden sind.

28. Abdeckung nach Patentanspruch 27, **dadurch gekennzeichnet, dass** das genannte erste Abdeckelement (202) und die genannten dazwischen liegenden Abdeckelemente (203, 204) jeweils zwei Paare von verlängerten Schlitzen (206, 207) aufweisen, welche die jeweiligen genannten Führungen (206, 207) beschreiben; wobei jedes Paar von Schlitzen (206, 207) einer jeweiligen genannten Stange (208, 209) zugeordnet ist.

29. Abdeckung nach Patentanspruch 28, **dadurch gekennzeichnet, dass** die genannten Führungs- und Haltemittel (210) einen Schlitten (215) enthalten, der in der Richtung (D1) rechtwinklig zu den genannten Stangen (208, 209) beweglich und starr an den Stangen (208, 209) selbst befestigt ist.

30. Abdeckung nach Patentanspruch 29, **dadurch gekennzeichnet, dass** das genannte erste Abdeckelement (202) eine Führung (216) zum Gleiten des genannten Schlittens (215) aufweist.

31. Abdeckung nach Patentanspruch 9, **dadurch gekennzeichnet, dass** die genannten Führungs- und Haltemittel (310) für jedes bewegliche Abdeckelement (306, 307, 308) wenigstens eine Rolle (312; 313) aufweisen, die drehbar durch den jeweiligen genannten Abschnitt (306g, 307g, 308g) zur Verbindung mit dem genannten ersten Abdeckelement (305) getragen ist; wobei die genannte Rolle (312, 313) das genannte erste Abdeckelement (305) in einer Rollbewegung greift.

## Revendications

1. Un panneau de protection pour un organe de travail mobile le long d'un parcours déterminé suivant au moins une direction déterminée (D; D1, D2) afin d'opérer dans une zone d'usinage et présentant une partie arrière, par l'intermédiaire de laquelle l'organe lui-même dépasse en porte-à-faux d'une machine-outil, et une partie avant de travail opposée à la partie arrière ; le panneau de protection (1; 101; 201; 301) comprenant une série d'éléments de couverture (5, 6, 7, 8; 102, 103, 104, 105; 202, 203, 204, 205; 305, 306, 307, 308), accouplés entre eux de façon coulissante et sous forme d'un premier élément de couverture (5; 102; 202; 305), pouvant être fixé à ladite machine, un deuxième élément de couverture mobile (8; 105; 205; 308), opérationnellement relié audit organe de travail, et un ou plusieurs éléments de couverture intermédiaires (6, 7; 103, 104; 203, 204; 306, 307), mobiles les uns par rapport aux autres et par rapport auxdits premier et deuxième éléments de couverture (5, 8; 102, 105; 202, 205; 305, 308) ; chaque élément de couverture (5, 6, 7, 8; 102, 103, 104, 105; 202, 203, 204, 205; 305, 306, 307, 308) susmentionné présentant une ouverture (5a, 6a, 7a, 8a; 102a, 103a, 104a, 105a; 202a, 203a, 204a, 205a; 305a, 306a, 307a, 308a) respective pour le passage dudit organe de travail ; l'ouverture (5a; 102a; 202a; 305a) du premier élément de couverture (5; 102; 202; 305) étant recouverte par les éléments de couverture mobiles restants (6, 7, 8; 103, 104, 105; 203, 204, 205; 306, 307, 308) ; le panneau de protection (1; 101; 201; 301) comprenant en outre des moyens de guidage et de retenue (10; 110; 210; 310) pour accoupler de façon réciproquement coulissante lesdits éléments de couverture (5, 6, 7, 8; 102, 103, 104, 105; 202, 203, 204, 205; 305, 306, 307, 308) de ladite série d'éléments de couverture (5, 6, 7, 8; 102, 103, 104, 105; 202, 203, 204, 205; 305, 306, 307, 308) de manière à recouvrir ledit organe de travail dans ses mouvements le long du parcours prédéterminé ; le panneau de protection (1; 101; 201; 301) étant **caractérisé en ce que**, par rapport audit premier élément de couverture (5; 102; 202; 305), lesdits moyens de guidage et de retenue (10; 110; 210; 310) sont orientés vers la partie arrière de l'organe de travail ; et **en ce que** ledit deuxième élément de couverture (8; 105; 205; 308) est proximal et le premier élément de couverture (5; 102; 202; 305) est distal par rapport à la partie avant de travail de l'organe de travail.

2. Le panneau selon la revendication 1, **caractérisé en ce que** lesdits moyens de guidage et de retenue (10; 310) comprennent, pour chaque élément de couverture mobile (6, 7, 8; 306, 307, 308) susmentionné, au moins une portion (6g, 7g, 8g; 6h, 7h, 8h; 6i, 7i, 8i; 6m, 6n, 7m, 7n, 8m, 8n; 306g, 307g, 308g) de l'élément (6, 7, 8; 306, 307, 308) lui-même destinée à s'accrocher avec au moins un autre élément de couverture (5, 6, 7; 305) de ladite série d'éléments de couverture (5, 6, 7, 8; 305, 306, 307 308) ; ladite portion d'accrochage (6g, 7g, 8g; 6h, 7h, 8h; 6i, 7i, 8i; 6m, 6n, 7m, 7n, 8m, 8n; 306g, 307g, 308g) étant orientée vers la zone à protéger.

3. Le panneau selon la revendication 2, **caractérisé en ce que** lesdites ouvertures (6a, 7a, 8a; 306a, 307a, 308a) desdits éléments de couverture mobiles (6, 7, 8; 306, 307, 308) ont des dimensions réciproquement décroissantes, en partant de l'élément de couverture mobile (6; 306) le plus proche dudit premier élément de couverture (5; 305) jusqu'à l'élément de couverture mobile (8; 308) le plus éloigné dudit premier élément de couverture (5; 305).

4. Le panneau selon la revendication 2 ou 3, **caractérisé en ce que** lesdits éléments de couverture mobiles (6, 7, 8; 306, 307, 308) ont des dimensions réciproquement décroissantes, en partant de l'élément de couverture mobile (6; 306) le plus proche dudit premier élément de couverture (5; 305) jusqu'à l'élément de couverture mobile (8; 308) le plus éloigné dudit premier élément de couverture (5; 305).

5. Le panneau selon l'une quelconque des revendications de 2 à 4, **caractérisé en ce que** chaque élément de couverture mobile (6, 7, 8; 306, 307, 308) susmentionné présente une portion (6d, 7d, 8d) destinée à venir en prise avec une portion de butée (5e, 6e, 7e) correspondante d'un élément de couverture adjacent (5, 6, 7; 305, 306, 307) pour l'entraînement et l'arrêt desdits éléments de couverture mobiles (6, 7, 8; 306, 307, 308) le long de ladite direction linéaire (D) de mouvement dudit organe de travail (2).

6. Le panneau selon l'une quelconque des revendications de 2 à 5, **caractérisé en ce que** lesdits éléments de couverture (5, 6, 7, 8) comprennent des plaques planes de couverture (5p, 6p, 7p, 8p) respectives, superposées entre elles, qui présentent un premier et un second pans (5f', 5f", 6f', 6f", 7f', 7f", 8f', 8f") longitudinalement opposés, raccordés entre eux par des bandes longitudinales (5s', 5s", 6s', 6s", 7s', 7s", 8s', 8s") bordant et définissant lesdites ouvertures de passage (5a, 6a, 7a, 8a).

7. Le panneau selon l'une quelconque des revendications de 2 à 6, **caractérisé en ce que** les moyens de guidage et de retenue (10) définissent des moyens pour l'accouplement télescopique entre lesdits éléments de couverture (5, 6, 7, 8) définissant ladite série d'éléments de couverture (5, 6, 7, 8).

8. Le panneau selon la revendication 7, **caractérisé en ce qu'**il présente un plan (A) de symétrie essentielle coïncidant avec un plan médian dudit premier élément de couverture (5).

9. Le panneau selon l'une quelconque des revendications de 2 à 6, **caractérisé en ce que** lesdits moyens de guidage et de retenue (10; 310) comprennent, pour chaque élément de couverture mobile (6, 7, 8; 306, 307, 308) susmentionné, au moins une portion (6i, 7i, 8i; 6m, 6n, 7m, 7n, 8m, 8n; 306g, 307g, 308g) de l'élément (6, 7, 8; 306, 307, 308) lui-même destinée à s'accrocher avec ledit premier élément de couverture (5; 305) ; ladite portion d'accrochage (6i, 7i, 8i; 6m, 6n, 7m, 7n, 8m, 8n; 306g, 307g, 308g) étant orientée vers la zone à protéger.

10. Le panneau selon l'une quelconque des revendications de 2 à 9, **caractérisé en ce que** lesdits moyens de guidage et de retenue (10; 310) comprennent ledit premier élément de couverture (5, 305).

11. Le panneau selon l'une quelconque des revendications de 2 à 10, **caractérisé en ce qu'**il comprend des moyens d'amortissement (11) interposés entre lesdits éléments de couverture (5, 6, 7, 8) de ladite série d'éléments de couverture (5, 6, 7, 8).

12. Le panneau selon la revendication 1, **caractérisé en ce que** lesdits moyens de guidage et de retenue (110) comprennent, pour chaque élément de couverture mobile (104, 105) susmentionné, au moins un élément de guidage et de retenue (103g, 104g, 105g) accouplé de façon coulissante à la fois audit premier élément de couverture (102), le long d'une première direction (D1) de coulissement relatif parallèle audit plan, et à l'élément de couverture mobile (103, 104, 105) lui-même, le long d'une seconde direction (D2) de coulissement relatif parallèle audit plan et orthogonale à ladite première direction (D1).

13. Le panneau selon la revendication 1, **caractérisé en ce que** lesdits éléments de couverture (102, 103, 104, 105) comprennent des panneaux plans de couverture (102p, 103p, 104p, 105p) respectifs, superposés entre eux et présentant lesdites ouvertures de passage (102a, 103a, 104a, 105a) ; lesdits panneaux plans de couverture (103p, 104p, 105p) des éléments de couverture mobiles (103, 104, 105) étant positionnés du côté opposé de la partie arrière de l'organe de travail par rapport audit panneau plan de couverture (102p) du premier élément de couverture (102).

14. Le panneau selon la revendication 13, **caractérisé en ce que** lesdits moyens de guidage et de retenue (110) comprennent, pour chaque élément de couverture mobile (103, 104, 105) susmentionné, au moins un élément de guidage et de retenue (103g, 104g, 105g) accouplé de façon coulissante à la fois audit premier élément de couverture (102), le long d'une première direction (D1) de coulissement relatif parallèle audit plan, et audit élément de couverture mobile (103, 104, 105) le long d'une seconde direction (D2) de coulissement relatif parallèle audit plan et orthogonale à ladite première direction (D1).

15. Le panneau selon la revendication 12 ou 14, **caractérisé en ce que** ledit élément de guidage et de retenue (103g, 104g, 105g) est orienté vers la partie arrière de l'organe de travail.

16. Le panneau selon la revendication 15, **caractérisé en ce que** ledit élément de guidage et de retenue (103g, 104g, 105g) est positionné du côté opposé dudit élément de couverture mobile (103, 104, 105) correspondant par rapport audit premier élément de couverture (102).

17. Le panneau selon l'une quelconque des revendications de 12 à 16, **caractérisé en ce que** lesdits moyens de guidage et de retenue (110) comprennent, pour chaque élément de couverture mobile (103, 104, 105) susmentionné, au moins un premier élément (103b, 103c, 104b, 104c, 105b, 105c) destiné à venir en prise avec au moins un premier élément de butée (102p, 103p, 104p) correspondant d'un élément de couverture adjacent (102, 103, 104) pour l'entraînement et l'arrêt desdits éléments de couverture mobiles (103, 104, 105) le long de ladite seconde direction (D2).

18. Le panneau selon la revendication 17, **caractérisé en ce que** chaque élément de couverture mobile (103, 104, 105) susmentionné présente au moins une première portion (h) destinée à venir en prise avec au moins une première portion de butée (k) correspondante d'un élément de couverture adjacent (102, 103, 104) pour l'entraînement et l'arrêt desdits éléments de couverture mobiles (103, 104, 105) le long de ladite seconde direction (D2).

19. Le panneau selon l'une quelconque des revendications de 12 à 18, **caractérisé en ce que** lesdits moyens de guidage et de retenue (110) comprennent, pour chaque élément de couverture mobile (103, 104, 105) susmentionné, au moins un second élément (103g, 104g, 105g) destiné à venir en prise avec au moins un second élément de butée (102b, 102c, 103g, 104g) correspondant d'un élément de couverture adjacent (102, 103, 104) pour l'entraînement et l'arrêt desdits éléments de couverture mobiles (103, 104, 105) le long de ladite première direction (D1).

20. Le panneau selon la revendication 19, **caractérisé en ce que**, pour chaque élément de couverture mobile (103, 104, 105) susmentionné, ledit second élément de mise en prise (103g, 104g, 105g) et ledit second élément de butée (103g, 104g) sont définis par l'élément de guidage et de retenue (103g, 104g, 105g) respectif.

21. Le panneau selon l'une quelconque des revendications de 12 à 20, **caractérisé en ce que** ledit élément de guidage et de retenue (103g, 104g, 105g) comprend un corps allongé de guidage (103g, 104g, 105g) se développant principalement dans ladite seconde direction (D2) et présentant une section transversale définissant le contour d'une zone en forme de « T ».

22. Le panneau selon les revendications 19 et 21, **caractérisé en ce que** ledit corps allongé de guidage (103g, 104g, 105g) présente au moins une seconde portion (103d, 104d, 105d) destinée à venir en prise avec au moins une seconde portion de butée (102e, 103e, 104e) correspondante d'un second élément de butée adjacent (102b, 102c, 103g, 104g) susmentionné pour l'entraînement et l'arrêt desdits éléments de couverture mobiles (103, 104, 105) le long de ladite première direction (D1).

23. Le panneau selon la revendication 21, **caractérisé en ce que** chaque élément de couverture mobile (103, 104, 105) susmentionné présente au moins un appendice allongé (103b, 103c, 104b, 104c, 105b, 105c) se développant principalement dans ladite seconde direction (D2) et présentant une section transversale en forme de « T » ; ledit appendice (103b, 103c, 104b, 104c, 105b, 105c) étant accouplé audit corps allongé de guidage (103g, 104g, 105g) pour coulisser par rapport au corps (103g, 104g, 105g) lui-même suivant ladite seconde direction (D2).

24. Le panneau selon la revendication 23, **caractérisé en ce que** lesdits moyens de guidage et de retenue (110) comprennent ledit premier élément de couverture (102) et lesdits appendices allongés (103b, 103c, 104b, 104c, 105b, 105c) desdits éléments de couverture mobiles (103, 104, 105).

25. Le panneau selon la revendication 13, **caractérisé en ce que** lesdits moyens de guidage et de retenue (210) comprennent une première et une seconde tige (208, 209) espacées et parallèles entre elles et accouplées de façon coulissante auxdits éléments de couverture (202, 203, 204, 205) pour guider lesdits éléments de couverture mobiles (203, 204, 205) dans un mouvement de suivi dudit organe de travail suivant une seconde direction (D2) parallèle et une direction (D1) orthogonale auxdites tiges (208, 209).

26. Le panneau selon la revendication 25, **caractérisé en ce que** lesdits moyens de guidage et de retenue (210) comprennent une pluralité de coulisseaux (211, 212, 213, 214) supportés par lesdits éléments de couverture (202, 203, 204, 205) et accouplés de façon coulissante auxdites tiges (208, 209).

27. Le panneau selon la revendication 26, **caractérisé en ce que** ledit premier élément de couverture (202) et lesdits éléments de couverture intermédiaires (203, 204) présentent une pluralité de pistes (206, 207) se développant dans la direction (D1) orthogonale auxdites tiges (208, 209) et accouplées de façon coulissante auxdits coulisseaux (212, 213, 214) respectifs.

28. Le panneau selon la revendication 27, **caractérisé en ce que** ledit premier élément de couverture (202) et lesdits éléments de couverture intermédiaires (203, 204) présentent chacun deux paires de fentes allongées (206, 207) définissant lesdites pistes (206, 207) respectives ; chaque paire de fentes (206, 207) étant associée à une tige respective (208, 209) susmentionnée.

29. Le panneau selon la revendication 28, **caractérisé en ce que** lesdits moyens de guidage et de retenue (210) comprennent un chariot (215) mobile dans la direction (D1) orthogonale auxdites tiges (208, 209) et fixé de façon rigide aux tiges (208, 209) elles-mêmes.

30. Le panneau selon la revendication 29, **caractérisé en ce que** ledit premier élément de couverture (202) présente une piste (216) pour le coulissement dudit chariot (215).

31. Le panneau selon la revendication 9, **caractérisé en ce que** lesdits moyens de guidage et de retenue (310) comprennent, pour chaque élément de couverture mobile (306, 307, 308) susmentionné, au moins un rouleau (312; 313) supporté de façon pivotante par ladite portion (306g, 307g, 308g) respective destinée à s'accrocher audit premier élément de couverture (305) ; ledit rouleau (312, 313) venant en prise avec ledit premier élément de couverture (305) par le biais d'un mouvement de roulement.
